# EUROPEAN PATENT APPLICATION

(11) **EP 4 471 593 A1**
(43) Date of publication of application: **04.12.2024**
(21) Application number: 23787771.7
(22) Date of filing: 12.04.2023
(51) Int. Cl.: G06F 9/50

(54) **DISTRIBUTED RESOURCE SHARING METHOD AND RELATED APPARATUS**

(30) Priority: 15.04.2022 CN 202210397364
(71) Applicant: Huawei Technologies Co., Ltd., Shenzhen, Guangdong 518129 (CN)
(72) Inventor: DENG, Guangxing, Shenzhen, Guangdong 518129 (CN)
(74) Representative: Epping - Hermann - Fischer
(86) International application number: PCT/CN2023/087917
(87) International publication number: WO 2023/198128

(57) **Abstract**

This application provides a distributed resource sharing method and a related apparatus. The method includes the following steps: A first node obtains a first resource sandbox corresponding to a first service, where the first resource sandbox includes resource information on a second node; the first node determines that the first service needs to be executed over a first resource corresponding to first resource information in the first resource sandbox; and when the first resource is a resource on the second node, the first node calls the second node to execute the first service over the first resource on the second node. This can implement node resource sharing and cross-device resource access, thereby implementing high-quality resource sharing and improving computing performance and service execution efficiency.

## Description

This application claims priority to Chinese Patent Application No. 202210397364.2, filed with the China National Intellectual Property Administration on April 15, 2022 and entitled "DISTRIBUTED RESOURCE SHARING METHOD AND RELATED APPARATUS", which is incorporated herein by reference in its entirety.

### TECHNICAL FIELD

This application relates to the field of distributed computing technologies, and in particular, to a distributed resource sharing method and a related apparatus.

### BACKGROUND

With rapid development of the internet, explosive growth of an information volume, and popularization of AI technologies, a demand for computing capabilities increases significantly. In addition, as silicon chips approach limits of physical and economic costs, computing performance improvement of a single computing chip or computer reaches a bottleneck. Therefore, how to improve a computing capability and service execution efficiency based on computing performance of different computers or chips is an urgent problem to be resolved.

### SUMMARY

This application provides a distributed resource sharing method and a related apparatus, to implement node resource sharing and cross-device resource access, thereby implementing high-quality resource sharing and improving computing performance and service execution efficiency.

According to a first aspect, an embodiment of this application provides a distributed resource sharing method. The method includes: A first node obtains a first resource sandbox corresponding to a first service, where the first resource sandbox includes resource information on a second node; the first node determines that the first service needs to be executed over a first resource corresponding to first resource information in the first resource sandbox; and when the first resource is a resource on the second node, the first node calls the second node to execute the first service over the first resource on the second node.

When the first node determines that the first service needs to be executed over the first resource corresponding to the first resource information in the first resource sandbox, the first node only determines that the first service is executed over the first resource corresponding to the first resource information in the first resource sandbox.

Optionally, the first resource sandbox may further include resource information on another node, for example, resource information on the first node or resource information on a third node.

This can implement node resource sharing and cross-device resource access, thereby implementing high-quality resource sharing and improving computing performance and service execution efficiency.

With reference to the first aspect, in a possible implementation, that the first node determines that the first service needs to be executed over a first resource corresponding to first resource information in the first resource sandbox specifically includes: The first node determines that a first process of the first service needs to be executed over the first resource corresponding to the first resource information in the first resource sandbox. That the first node calls the second node to execute the first service over the first resource on the second node specifically includes: The first node sends a first request to the second node, where the first request is used to request the second node to execute the first service over the first resource on the second node; and the first node receives an execution result that is sent by the second node and that is of executing the first service over the first resource.

With reference to the first aspect, in a possible implementation, the method further includes: The first node determines that a second process of the first service needs to be executed over a second resource corresponding to second resource information in the first resource sandbox; the first node sends a second request to the second node, where the second request is used to request the second node to run the second process, and the second request includes running data of the second process; and the first node stops running the second process.

The running data of the second process includes but is not performed on: an identifier of a resource sandbox in which the second process is located, temporary data generated during running of the second process, a resource accessed by the second process, and the like.

In another possible implementation, after receiving the second request, the second node creates the second process based on the first resource sandbox. That is, processes are created based on a same resource sandbox and the processes are run on two different nodes, so that the two processes can normally sense and interact with each other, to complete a normal service function. Processes can be migrated without code modification and run on different compute nodes. With reference to the first aspect, in a possible implementation, after the first node determines that the first process of the first service needs to be executed over the first resource corresponding to the first resource information in the first resource sandbox, the method further includes: The first node obtains a first instruction, where the first instruction is used to run a second process of the first service; and the first node sends a second request to the second node in response to the first instruction, where the second request is used to request the second node to run the second process, and the second request includes a startup parameter of the second process. The startup parameter of the second process includes but is not limited to: an identifier of a resource sandbox in which the second process is located, a function of the second process, a resource accessed by the second process, and the like.

In another possible implementation, after receiving the second request, the second node creates the second process based on the first resource sandbox. That is, processes are created based on a same resource sandbox and the processes are run on two different nodes, so that the two processes can normally sense and interact with each other, to complete a normal service function. Processes can be migrated without code modification and run on different compute nodes. With reference to the first aspect, in a possible implementation, before the first node calls the second node to execute the first service over the first resource on the second node, the method further includes: The first node synchronizes resource information in the first resource sandbox to the second node. In this way, a resource sandbox before a node is shared, which makes it possible to migrate a process on the node.

With reference to the first aspect, in a possible implementation, the first resource sandbox includes third resource information, and a resource type of a third resource corresponding to the third resource information is the same as a resource type of the first resource. Before the first node obtains the first resource sandbox corresponding to the first service, the method further includes: When the first node determines that performance of the first resource is higher than performance of the third resource, the first node generates the first resource sandbox based on the first resource information. In this way, a node may select resources with higher performance from a plurality of resources of a same type to form a resource sandbox, that is, an advantageous resource on each node is used, to improve service execution efficiency.

With reference to the first aspect, in a possible implementation, the first resource sandbox further includes the resource information on the first node; and the method further includes: When the first resource is a resource on the first node, the first node locally accesses the first resource over a first process.

With reference to the first aspect, in a possible implementation, the resource type of the first resource is any one of the following: a system file resource, a device resource, a network resource, an inter-process communication resource, and a memory resource.

With reference to the first aspect, in a possible implementation, before the first node calls the second node to execute the first service over the first resource on the second node, the method further includes: The first node sends a third request to the second node, where the third request is used to request the second node to create a first virtual process, and the first virtual process is used by the second node to execute, based on the first virtual process, the first service over the first resource on the second node.

According to a second aspect, this application provides a distributed resource sharing apparatus. The apparatus includes: a processing unit, configured to obtain a first resource sandbox corresponding to a first service, where the first resource sandbox includes resource information on a second node, where the processing unit is further configured to determine that the first service needs to be executed over a first resource corresponding to first resource information in the first resource sandbox; and a communication unit, configured to: when the first resource is a resource on the second node, call the second node to execute the first service over the first resource on the second node. This can implement node resource sharing and cross-device resource access, thereby implementing high-quality resource sharing and improving computing performance and service execution efficiency.

With reference to the second aspect, in a possible implementation, the processing unit is specifically configured to determine that a first process of the first service needs to be executed over the first resource corresponding to the first resource information in the first resource sandbox; and the communication unit is specifically configured to: send a first request to the second node, where the first request is used to request the second node to execute the first service over the first resource on the second node; and receive an execution result that is sent by the second node and that is of executing the first service over the first resource.

With reference to the second aspect, in a possible implementation, the processing unit is further configured to determine that a second process of the first service needs to be executed over a second resource corresponding to second resource information in the first resource sandbox; the communication unit is further configured to send a second request to the second node, where the second request is used to request the second node to run the second process, and the second request includes running data of the second process; and the processing unit is further configured to stop running the second process.

With reference to the second aspect, in a possible implementation, the processing unit is further configured to obtain a first instruction, where the first instruction is used to run a second process of the first service; and the communication unit is further configured to send a second request to the second node in response to the first instruction, where the second request is used to request the second node to run the second process, and the second request includes a startup parameter of the second process.

With reference to the second aspect, in a possible implementation, the communication unit is further configured to synchronize resource information in the first resource sandbox to the second node.

With reference to the second aspect, in a possible implementation, the first resource sandbox includes third resource information, and a resource type of a third resource corresponding to the third resource information is the same as a resource type of the first resource; and the processing unit is further configured to: when the first node determines that performance of the first resource is higher than performance of the third resource, generate the first resource sandbox based on the first resource information.

With reference to the second aspect, in a possible implementation, the first resource sandbox further includes resource information on the first node; and the processing unit is further configured to: when the first resource is a resource on the first node, locally access the first resource over a first process.

With reference to the second aspect, in a possible implementation, the resource type of the first resource is any one of the following: a system file resource, a device resource, a network resource, an inter-process communication resource, and a memory resource.

With reference to the second aspect, in a possible implementation, the communication unit is further configured to send a third request to the second node, where the third request is used to request the second node to create a first virtual process, and the first virtual process is used by the second node to execute, based on the first virtual process, the first service over the first resource on the second node.

According to a third aspect, an embodiment of this application provides a distributed resource sharing system. The system includes a first node and a second node. The second node is configured to send resource information on the second node to the first node. The first node is configured to generate a first resource sandbox based on the resource information on the second node. The first node is further configured to determine that a first service needs to be executed over a first resource corresponding to first resource information in the first resource sandbox. The first node is further configured to: when the first resource is a resource on the second node, call the second node to execute the first service over the first resource on the second node.

According to a fourth aspect, this application provides an apparatus, used as a first node. The first node includes one or more processors, one or more memories, and a communication module. The communication module and the one or more memories are coupled to the one or more processors. The one or more memories are configured to store computer program code, and the computer program code includes computer instructions. The one or more processors call the computer instructions to enable the first node to perform the method provided in any possible implementation of any one of the foregoing aspects.

According to a fifth aspect, this application provides a computer-readable storage medium. The computer-readable storage medium stores instructions; and when the instructions are run on a first node, the first node is enabled to perform the method provided in any possible implementation of any one of the foregoing aspects.

According to a sixth aspect, this application provides a computer program product. When the computer program product is executed by a first node, the first node is enabled to perform the method provided in any possible implementation of any one of the foregoing aspects.

For beneficial effects of the second aspect to the sixth aspect, refer to descriptions of beneficial effects of the first aspect. Details are not described herein again.

### BRIEF DESCRIPTION OF DRAWINGS

FIG. 1 is a schematic flowchart of a cross-node thread migration method according to an embodiment of this application;
FIG. 2 is a diagram of an architecture according to an embodiment of this application;
FIG. 3 is a diagram of functional modules for implementing resource sharing on a node A according to an embodiment of this application;
FIG. 4A and FIG. 4B are a diagram of functional modules corresponding to a case in which a node A calls resources on a node B according to an embodiment of this application;
FIG. 5 is a diagram of a procedure in which a node A accesses a file system resource on a node B according to an embodiment of this application;
FIG. 6A and FIG. 6B are a diagram of a procedure in which a node A accesses a system file resource on a node B over a shadow process according to an embodiment of this application;
FIG. 7 is a diagram of a procedure in which a node A accesses a communication protocol on a node B according to an embodiment of this application;
FIG. 8 is a schematic flowchart of a method in which a node A accesses an IPC resource on a node B according to an embodiment of this application;
FIG. 9 is a schematic flowchart of a method for migrating, by a node A, a created process to a node B for running according to an embodiment of this application;
FIG. 10 is a schematic flowchart of a method in which a node A indicates a node B to create a new process when the node A is about to create the new process according to an embodiment of this application;
FIG. 11 is a method schematic flowchart of a distributed resource sharing method according to an embodiment of this application;
FIG. 12 is a diagram of a structure of a distributed resource sharing apparatus according to an embodiment of this application; and
FIG. 13 is a diagram of a structure of an apparatus 1300 according to an embodiment of this application.

### DESCRIPTION OF EMBODIMENTS

Technical solutions in embodiments of this application are clearly and completely described below with reference to accompanying drawings. In the descriptions of embodiments of this application, unless otherwise stated, "/" represents "or". For example, A/B may represent A or B. In this specification, "and/or" merely describes an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. A frequently-used representation form of the user interface is a graphical user interface (graphical user interface, GUI) that is a user interface that is displayed in a graphical manner and that is related to a computer operation. The user interface may be a visual interface element, for example, a text, an icon, a button, a menu, a tab, a text box, a dialog box, a status bar, a navigation bar, or a Widget that is displayed on a display of an electronic device.

To improve a computing capability based on computing performance of different computation units, the different computation units may be combined into a cluster. The cluster combines hardware capabilities and computing capabilities of the plurality of different computation units, and may be used to perform large-scale data computing. For example, cross-node thread migration may be implemented, to be specific, a thread on a process on a node in the cluster is split, and a thread is created on another node.

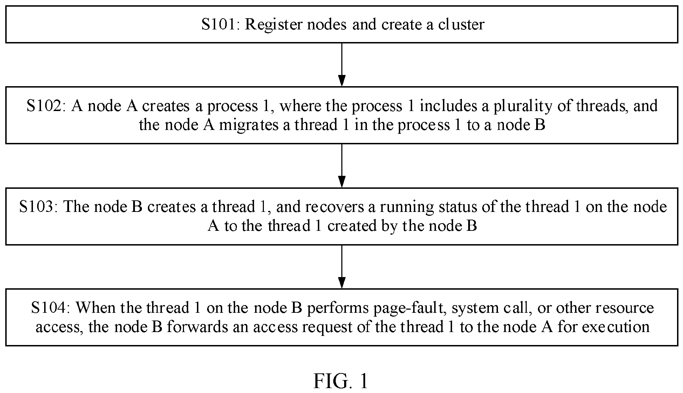

FIG. 1 is a schematic flowchart of an example of a cross-node thread migration method.

S 101: Register nodes and create a cluster.

S102: A node A creates a process 1, where the process 1 includes a plurality of threads (for example, a thread 1 and a thread 2), and actively calls a do_migrate method in process code of the node A to migrate the thread 1 in the process 1 to a node B.

S 103: The node B creates a thread 1, and recovers a running status of the thread 1 on the node A to the thread 1 created by the node B.

S104: When the thread 1 on the node B performs page-fault, system call, or other resource access, the node B forwards an access request of the thread 1 to the node A for execution.

Although the thread migration technology can implement cross-node thread execution, the technology has the following problems:
1. A process originates from a source node, and all resources on which running of the process depends come from the source node. For a cluster formed by diversified computing powers, different computing power units may provide different resource capabilities and have their own advantages. To ensure service performance, resources required by a type of service may be a combination of resources on different computation units. For example, a DPU has an acceleration capability in terms of network and storage, and a process may use a network or storage resource on the DPU. However, in this solution, when a thread needs to access a resource, the thread needs to return to the source node to send a request, in other words, only a resource on the source node can be used, and an advantageous resource of each node in the cluster is not fully used.
2. In the foregoing technology, the process is created by the source node, and then a plurality of threads in the process are migrated to another node for execution. A core of the solution lies in an inter-thread memory synchronization mechanism. However, process-level communication seldom requires memory synchronization other than sharing a memory. Therefore, the technical solution is not applicable to process migration.

Therefore, an embodiment of this application provides a distributed resource sharing method, and the method includes the following steps.

Step 1: Register nodes and share resources between the nodes.

After a system is initialized, a user may use a user-mode interface to register a current node with a specified cluster. In a node registration phase, a unique identifier is configured for the current node. Subsequently, another node may use the identifier to access the current node. When a node in the cluster is registered, a resource of the current node is reported. In this way, each node has resource information of all the nodes in the current cluster. The user may also use a corresponding interface to query the nodes in the current cluster and the resource information.

The node is a device or a chip that has an independent operating system, for example, a server or a data processing unit (Data processing unit, DPU).

A resource of the node includes but is not limited to: a file system, a network, a hardware device, an inter-process communication (inter-process communication, IPC), a memory, and the like. The network is a network communication address, a network interface card, or the like on the node. The hardware device is a hardware structure on the node, for example, a central processing unit (central processing unit, CPU) or a graphics processing unit (Graphics processing unit, GPU). The IPC is an inter-process communication means on the node, for example, a pipe, a message queue, semaphore, a shared memory, and a socket.

Step 2: The node selects appropriate resource information to create a resource sandbox.

Based on a current service requirement, the node selects the appropriate resource information from the resource information provided by all the nodes in the cluster to create the resource sandbox. Information about the created resource sandbox is shared among all the nodes in the cluster. Other nodes can also view the information about resource sandboxes created on the other nodes.

The resource sandbox indicates a combination of advantageous resources required for running a process. The resource sandbox may include local resource information, or may include resource information on another node. Types of resource information included in the resource sandbox include but are not limited to: the file system, the network, the hardware device, the inter-process communication (inter-process communication, IPC), the memory, and the like.

The resource sandbox may also be referred to as an aggregation sandbox, a resource view, or the like.

The resource information includes an identifier of a resource, an identifier of a node on which the resource is located, and a pointer address of a resource instance. The pointer address of the resource instance may indicate a storage location of the resource instance on the node.

Step 3: The node executes a first service by using resource information in a specified resource sandbox.

The node creates the resource information based on the specified resource sandbox to execute the first service. When a first resource is a resource on an external node (for example, a second node), a first node calls the second node to execute the first service over the first resource on the second node.

A specific implementation in which a first node calls the second node to execute the first service over the first resource on the second node is: The first node sends a first request to the second node. After receiving the first request, the second node executes the first service over the first resource on the second node. The second node sends, to the first node, an execution result of executing the first service over the first resource. The first node receives the execution result of executing the first service by the second node over the first resource.

When a first resource is a resource on a local node (for example, a first node), the first node locally accesses the first resource over a first process.

Optionally, the node may create the resource information based on the specified resource sandbox to execute the first process of the first service, and establish a binding relationship between a structure (task struct) of the first process and the specified resource sandbox. When the first process accesses a resource in the resource sandbox, after intercepting a related access request, the node determines, based on the used resource in the specified resource sandbox, whether the resource that the first process needs to access is on a local node or a remote node. If the resource that the first process needs to access is on the local node, the first process directly enters a subsystem corresponding to a local kernel for processing. If the resource that the first process needs to access is on a source node, the node transfers, via a shared resource agent, an access request to a target node corresponding to the resource for processing.

It should be noted that, that the node creates the resource information based on the specified resource sandbox to execute the first service is described in the following embodiments of this application. In some embodiments, the node may directly execute the first service by using the node to create the resource information based on the specified resource sandbox, and does not need to create the first process. Alternatively, the node may directly execute the first process of the first service by creating the resource information based on the specified resource sandbox. This is not limited in embodiments of this application. In the following embodiments of this application, an example in which the node directly executes the first process of the first service by creating the resource information based on the specified resource sandbox is used for description.

According to the method, node resource synchronization in the cluster and cross-device resource access can be implemented, and whether a resource is a local resource or a remote resource does not need to be concerned, thereby implementing high-quality resource sharing and improving computing performance and service execution efficiency. This solution may further be applied to process migration. The resource sandboxes on the nodes in the cluster are shared. When a source node needs to migrate a process to another node for execution, the other node only needs to create a process based on a same resource sandbox as that on the source node. In this way, the processes are created based on the same resource sandbox and the processes are run on the two different nodes, so that the two processes can normally sense and interact with each other to complete a normal service function. In this way, the processes can be migrated without code modification and run on different compute nodes.

First, a diagram of an architecture according to an embodiment of this application is described.

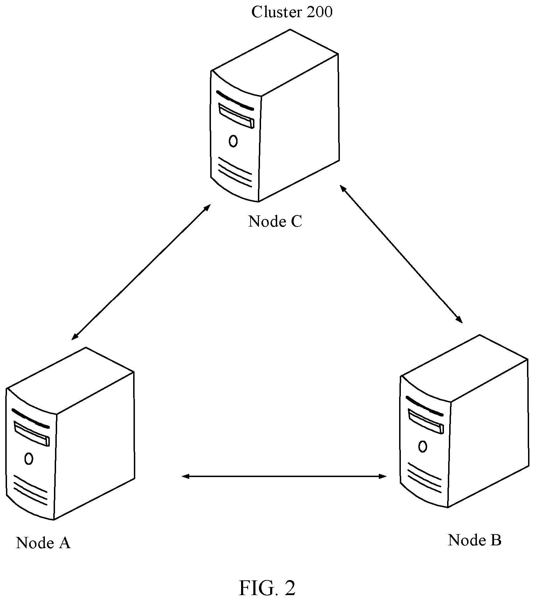

FIG. 2 is a diagram of an architecture according to an embodiment of this application.

As shown in FIG. 2, a node A, a node B, and a node C are located in a cluster 200. The node A, the node B, and the node C may all be servers.

The plurality of nodes may be connected to a same network. For example, the plurality of nodes may be connected to a same local area network. When the node A is a server and the node B is a DPU, the node A and the node B may not be connected to a same network, and the node B may be directly inserted into the node A through a hardware interface (for example, a PCIe (peripheral component interconnect express) interface). In this way, the node A can directly communicate with the node B. The PCIe is a high-speed serial computer extended bus standard. Alternatively, the node A and the node B may communicate with each other in another manner. This is not limited in embodiments of this application.

Optionally, in some embodiments, the cluster 200 may include only two nodes, for example, the node A and the node B. The cluster 200 may alternatively include more nodes. This is not limited in embodiments of this application. Another node may alternatively be dynamically added to the cluster 200. The node in the cluster 200 may alternatively exit from the cluster 200.

Optionally, in some embodiments, types of the node A, the node B, and the node C may alternatively be different. For example, the node A is a server and the node B is a DPU.

After the node A, the node B, and the node C enter the cluster 200, the node A has a unique identifier, the node B has a unique identifier, and the node C also has a unique identifier. In this way, another node in the cluster can access the node via the unique identifier.

After the node A, the node B, and the node C enter the cluster 200, the node A, the node B, and the node C report resource information of resources on their respective nodes, so that another node in the cluster 200 can obtain resource information of resources on each node.

In a possible implementation, a node in the cluster 200 may be specified as a node center, and the other nodes all register resource information of resources on their respective nodes with the node center. The node center integrates the resource information of the resources on all the nodes in the cluster 200, and then the node center delivers the resource information of the resources on all the nodes to each node.

For example, it is assumed that the node C is a node center, and the node A registers resource information of resources on the node A with the node C.

**Table 1**

| Node name | Resource information |
|---|---|
| Node A | File system 1 |
| Node A | Network 1 |
| Node A | Hardware device 1 |
| Node A | IPC 1 |
| Node A | Memory 1 |

Table 1 shows an example of the resource information on the node A. The resources on the node A include the file system 1, the network 1, the hardware device 1, the IPC 1, and the memory 1. The node A sends the resources on the node A to the node C.

The node B registers resources on the node B with the node C.

**Table 2**

| Node name | Resource information |
|---|---|
| Node B | File system 2 |
| Node B | Network 2 |
| Node B | Hardware device 2 |
| Node B | IPC 2 |
| Node B | Memory 2 |

Table 2 shows an example of resource information on the node B. The resource information on the node B includes the file system 2, the network 2, the hardware device 2, the IPC 2, and the memory 2. The node B sends the resource information on the node B to the node C.

After receiving the resource information sent by the node A and the node B, the node C integrates all the resource information on the node A, the node B, and the node C.

**Table 3**

| Node name | Resource information |
|---|---|
| Node C | File system 1 |
| Node C | Network 1 |
| Node C | Hardware device 1 |
| Node C | IPC 1 |
| Node C | Memory 1 |
| Node C | File system 2 |
| Node C | Network 2 |
| Node C | Hardware device 2 |
| Node C | IPC 2 |
| Node C | Memory 2 |
| Node C | File system 3 |
| Node C | Network 3 |
| Node C | Hardware device 3 |
| Node C | IPC 3 |
| Node C | Memory 3 |

Table 3 shows an example of all resource information on the node C. The resource information on the node B includes the file system 1, the network 1, the hardware device 1, the IPC 1, the memory 1, the file system 2, the network 2, the hardware device 2, the IPC 2, the memory 2, the file system 3, the network 3, the hardware device 3, the IPC 3, and the memory 3.

After obtaining resource information on other nodes in the cluster 200, the node C separately sends the resource information of all the nodes in the cluster 200 to each node, so that each node in the cluster 200 can know the resource information on the other nodes, to implement resource sharing.

In another possible implementation, every two nodes in the cluster 200 may communicate with each other. For example, the node A sends the resource information on the node A to the node C and the node B, the node B sends the resource information on the node B to the node C and the node A, and the node C sends the resource information on the node C to the node B and the node A. In this way, each node in the cluster 200 may also know the resource information on the other nodes, thereby implementing resource sharing.

The node in the cluster 200 may alternatively synchronize resource information in another manner, thereby implementing resource sharing. This is not limited in embodiments of this application.

After the node in the cluster 200 obtains resource information on other nodes, the node may create a plurality of different resource sandboxes, where the resource sandboxes integrate resource information on a local node and/or a remote node.

After the local node obtains resource information on other nodes, there may be a plurality of resources belonging to a same type on the local node. The node may compare performance of the plurality of resources belonging to the same type, and select a resource with better performance. The resource with better performance may also be referred to as an advantageous resource. By analogy, the local node may select a plurality of advantageous resources of different types to form a resource sandbox, and the resource sandbox may be used to complete a business item.

In this way, the node may integrate advantageous resources on the other nodes and/or the local node to form a resource sandbox, and the node may complete a predetermined service based on the resource sandbox, thereby implementing resource sharing and improving a computing capability and service execution efficiency.

The following describes a diagram of functional modules for implementing resource sharing on the node A.

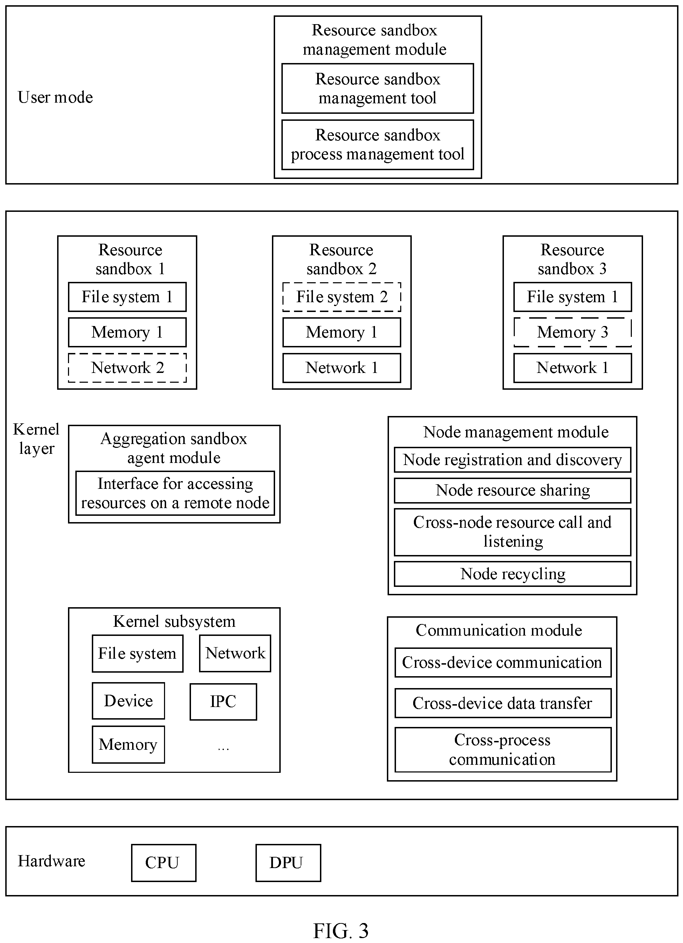

FIG. 3 is a diagram of an example of functional modules for implementing resource information sharing on a node A. A user mode includes a resource sandbox management module. The resource sandbox management module includes a resource sandbox management tool and a resource sandbox process management tool. The resource sandbox management tool is used to provide functions such as creation, addition, deletion, searching, and the like of a resource sandbox. The resource sandbox process management tool is used to create a process based on a resource sandbox and establish a binding relationship between the process and the specified resource sandbox.

A kernel layer includes one or more created resource sandboxes, for example, a resource sandbox 1, where the resource sandbox 1 integrates a file system resource (for example, a file system 1) and a memory resource (for example, a memory 1) on the node A, and further integrates a network resource (for example, a network 2) on a node B; for another example, a resource sandbox 2, where the resource sandbox 2 integrates a file system resource (for example, a file system 2) on a node B, and further integrates a memory resource (for example, a memory 1) and a network resource (for example, a network 1) on the node A; and for another example, a resource sandbox 3, where the resource sandbox 3 integrates a file system resource (for example, a file system 1) and a network resource (for example, a network 1) on the node A, and further integrates a memory resource (for example, a memory 3) on a node C. Optionally, in some embodiments, a resource sandbox on a node may be shared across nodes, that is, nodes may view a resource sandbox created on each node. In this case, processes created on other nodes based on a same resource sandbox have a same resource view, and the processes in the resource sandbox may interact with each other.

The kernel layer further includes a node management module. The node management module may be configured to provide capabilities of node registration and discovery, node resource sharing, cross-node resource call and listening, node recycling, and the like. The node registration and discovery is used to register nodes to form a cluster after the nodes are started up. The node resource sharing is used to provide resource information on a current node, so that a node in a cluster can obtain resource information on another node. The resource information includes an identifier of a resource, an identifier of a node on which a resource is located, and a pointer address of a resource instance. The pointer address of the resource instance may indicate a storage location of the resource instance on a resource. The cross-node resource call and listening is used to receive a resource access request from an external node. The node recycling is used to be responsible for deregistering node information and clearing residual data in a local environment. The kernel layer further includes an aggregation sandbox agent module. The aggregation sandbox agent module may be configured to provide, for a local process, an interface for accessing resources on a remote node, for example, an interface for accessing a file system resource on the remote node, an interface for accessing a network resource on the remote node, an interface for accessing a device resource on the remote node, an interface for accessing an IPC resource on the remote node, and an interface for accessing a memory resource on the remote node, to enable the local process to manipulate a remote resource look like it manipulates a local resource.

Optionally, in some embodiments, the aggregation sandbox agent module may further include a file system sharing module, and the file system sharing module may be configured to be responsible for providing shared file system access across nodes.

Optionally, in some embodiments, the aggregation sandbox agent module may further include a network sharing module, and the network sharing module may be configured to provide a consistent network view and a consistent network access capability for processes on different nodes.

Optionally, in some embodiments, the aggregation sandbox agent module may further include an IPC sharing module, and the IPC sharing module may be configured to implement an inter-process communication means across nodes, and maintain compatibility of an existing IPC interface of a process.

The kernel layer further includes a communication module that may be configured to provide capabilities of cross-device communication, cross-device data transfer, cross-process communication, and the like.

The kernel layer further includes a kernel subsystem. The kernel subsystem stores resources on a local node, for example, a file system resource, a network resource, a device resource, an IPC resource, and a memory resource. Hardware includes processing units such as a CPU and a DPU.

It should be noted that every two or more of the foregoing functional modules may be combined to complete a predetermined function. A function of one of the foregoing modules may alternatively be performed by another module. A function performed by each module is not limited in embodiments of this application.

The following describes a specific implementation procedure in which the local node calls a resource on the remote node.

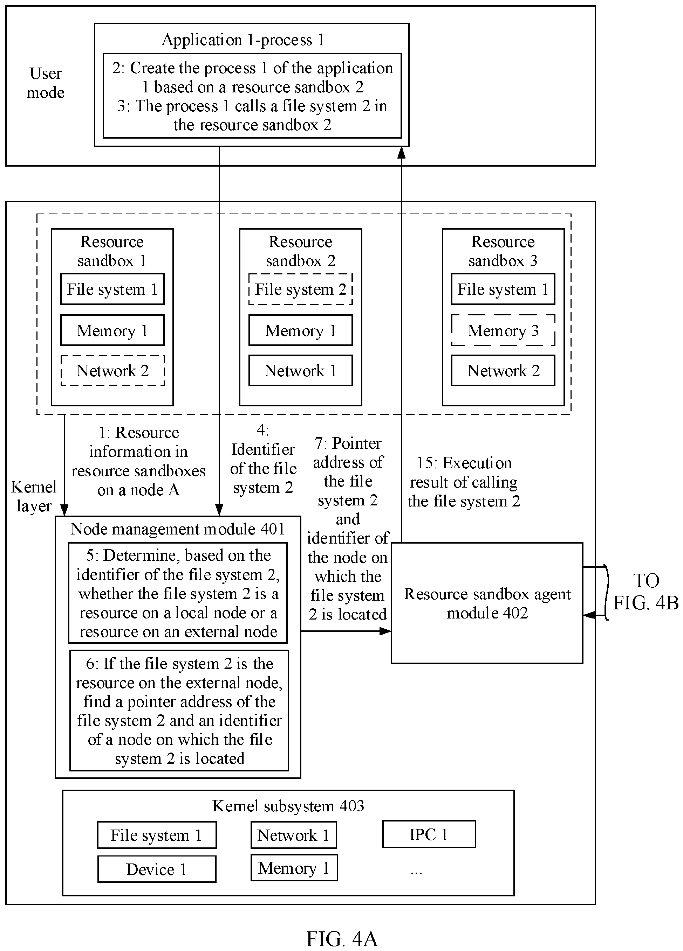

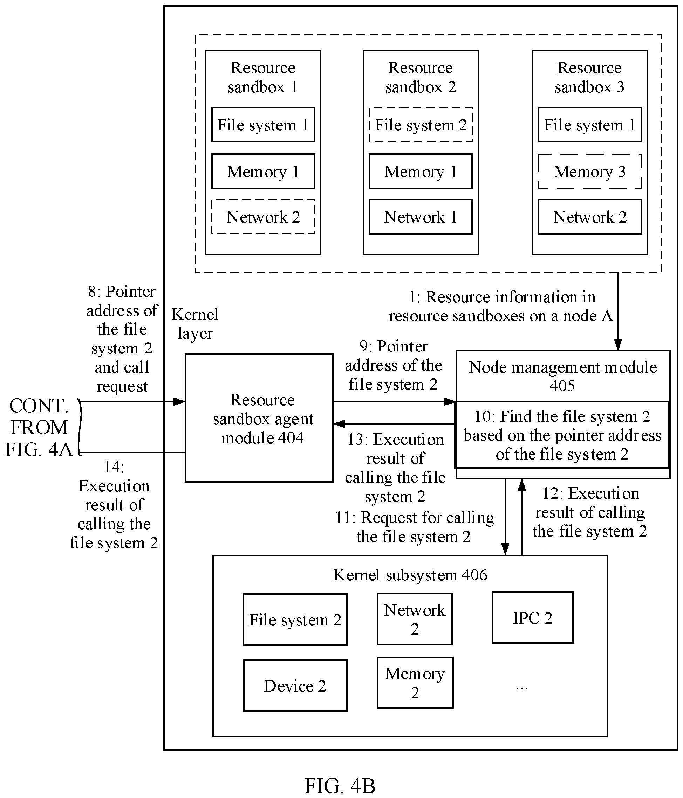

FIG. 4A and FIG. 4B are a diagram of an example of functional modules corresponding to a case in which a node A calls resources on a node B.

The node A and the node B may be connected to a same network, for example, connected to a same local area network. When the node A is a server and the node B is a DPU, the node A and the node B may not be connected to a same network, and the node B may be directly inserted into the node A through a hardware interface (for example, a PCIe interface), so that the node A can directly communicate with the node B. Alternatively, the node A and the node B may communicate with each other in another manner. This is not limited in embodiments of this application.

The node A includes a node management module 401, a resource sandbox agent module 402, and a kernel subsystem 403. The node B includes a node management module 405, a resource sandbox agent module 404, and a kernel subsystem 406. Each of the node A and the node B may further include other functional modules. For example, the node A may further include a resource sandbox management module (not shown in FIG. 4A and FIG. 4B), and the node B may also include a resource sandbox management module (not shown in FIG. 4A and FIG. 4B). A function of the resource sandbox management module has been described in the embodiment in FIG. 3. Details are not described in embodiments of this application again.

As shown in FIG. 4A and FIG. 4B, a method procedure in which the node A calls the resources on the node B may be as follows:
1: Nodes in a cluster share resource information on their respective nodes, and resource information on a local node and/or resource information on another node are combined to obtain a resource sandbox. The resource information includes an identifier of a resource, an identifier of a node on which the resource is located, and a pointer address of a resource instance. The pointer address of the resource instance may indicate a storage location of the resource instance on a resource.

Then, the nodes in the cluster can share resource sandboxes on their respective nodes.

For example, the node A has a resource sandbox 1, a resource sandbox 2, and a resource sandbox 3. The node B also has a resource sandbox 1, a resource sandbox 2, and a resource sandbox 3. For descriptions of the resource sandbox 1, the resource sandbox 2, and the resource sandbox 3, refer to the descriptions in the embodiment in FIG. 3. Details are not described in embodiments of this application again.

Then, a node reports resource information in a resource sandbox to a node management module, so that the node management module manages the resource information on the node.

For example, the node A reports resource information in the resource sandbox 1, resource information in the resource sandbox 2, and resource information in the resource sandbox 3 to the node management module 401, and the node B also reports resource information in the resource sandbox 1, resource information in the resource sandbox 2, and resource information in the resource sandbox 3 to the node management module 401.

2: After creating the resource sandboxes, the node A creates a process 1 of an application 1 based on the resource sandbox 2.

The node A creates the process 1 of the application 1 based on the resource sandbox 2, and establishes a binding relationship between the process 1 and the resource sandbox 2.
3: The process 1 calls a file system 2 in the resource sandbox 2.
4: The node A sends an identifier of the file system 2 to the node management module 401.
5: After receiving the identifier of the file system 2, the node management module 401 may be configured to determine, based on the identifier of the file system 2, whether a file system 2 called by a process II is a resource on the local node or a resource on an external node.

Specifically, the node management module 401 may determine, based on the locally stored resource information in the resource sandboxes, whether the file system 2 is the resource on the local node or the resource on the external node.

6: If the node management module 401 determines that the file system 2 is the resource on the external node, the node management module 401 needs to find a pointer address of the file system 2 and an identifier of a node on which the file system 2 is located.

Optionally, step 6 may alternatively be performed by the process 1.

Specifically, the node management module 401 may find, based on the locally stored resource information in the resource sandboxes, the pointer address of the file system 2 and the identifier of the node on which the file system 2 is located.

If the node management module 401 determines that the file system 2 is the resource on the local node, the node management module 401 directly sends a request for calling a file system on the local node to the kernel subsystem 403. After receiving the request for calling the file system on the local node that is sent by the node management module 401, the kernel subsystem 403 performs a corresponding operation, obtains an execution result, and sends the execution result of calling the file system on the local node to the node management module 401. Then, the node management module 401 sends the execution result of calling the file system on the local node to the process 1 of the application 1.
7: The node management module 401 sends the pointer address of the file system 2 and the identifier of the node on which the file system 2 is located to the resource sandbox agent module 402.
8: The resource sandbox agent module 402 sends the pointer address of the file system 2 and the call request to the resource sandbox agent module 404 on the node B.

Optionally, the call request may include the pointer address of the file system 2, in other words, the resource sandbox agent module 402 needs to send only the call request to the resource sandbox agent module 404 on the node B.

After receiving the pointer address of the file system 2 and the identifier of the node on which the file system 2 is located that are sent by the node management module 401, the resource sandbox agent module 402 finds, based on the identifier of the node on which the file system 2 is located, that a node on which the file system 2 is located is the node B, and determine a communication address of the node B. Then, the resource sandbox agent module 402 sends the pointer address of the file system 2 and the call request to the resource sandbox agent module 404 on the node B based on the communication address of the node B.
9: After receiving the pointer address of the file system 2 and the call request that are sent by the resource sandbox agent module 402, the resource sandbox agent module 404 sends the pointer address of the file system 2 to the node management module 405 on the node B.
10: After receiving the pointer address of the file system 2 that is sent by the resource sandbox agent module 404, the node management module 405 finds the file system 2 based on the pointer address of the file system 2.
11: The node management module 405 sends the request for calling the file system 2 to the kernel subsystem 406.
12: After receiving the request for calling the file system 2, the kernel subsystem 406 performs a corresponding operation, obtains an execution result, and sends the execution result of calling the file system 2 to the node management module 405.
13: After receiving the execution result of calling the file system 2 that is sent by the kernel subsystem 406, the node management module 405 sends the execution result of calling the file system 2 to the resource sandbox agent module 404.
14: After receiving the execution result of calling the file system 2 that is sent by the node management module 405, the resource sandbox agent module 404 sends the execution result of calling the file system 2 to the resource sandbox agent module 402.
15: After receiving the execution result of calling the file system 2 that is sent by the resource sandbox agent module 404, the resource sandbox agent module 402 sends the execution result of calling the file system 2 to the process 1 of the application 1.

Optionally, step 8 to step 14 may be replaced with the following step 8 to step 11.
8: The resource sandbox agent module 402 sends the pointer address of the file system 2 and the call request to the node management module 405 on the node B.
9: After receiving the pointer address of the file system 2 that is sent by the resource sandbox agent module 402, the node management module 405 sends the request for calling the file system 2 to the kernel subsystem 406 on the node B.
10: After receiving the request for calling the file system 2, the kernel subsystem 406 performs a corresponding operation, obtains an execution result, and sends the execution result of calling the file system 2 to the node management module 405.
11: The node management module 405 sends the execution result of calling the file system 2 to the resource sandbox agent module 402.

In this way, the node A remotely calls the resources on the node B and obtains the execution result. Node resource synchronization in the cluster and cross-device resource access are implemented, and whether a resource is a local resource or a remote resource does not need to be concerned, thereby implementing high-quality resource sharing and improving computing performance and service execution efficiency.

The embodiment in FIG. 4A and FIG. 4B describes a procedure of how the node A calls the resources on the interface B. The resources include but are not limited to a file system resource, a network resource, a hardware device resource, an IPC resource, a memory resource, and the like.

The following separately describes in detail with reference to procedures of how the node A calls the file system resource, the network resource, and the IPC resources on the node B.

First, a specific implementation in which the node A accesses the file system resource on the node B is described.

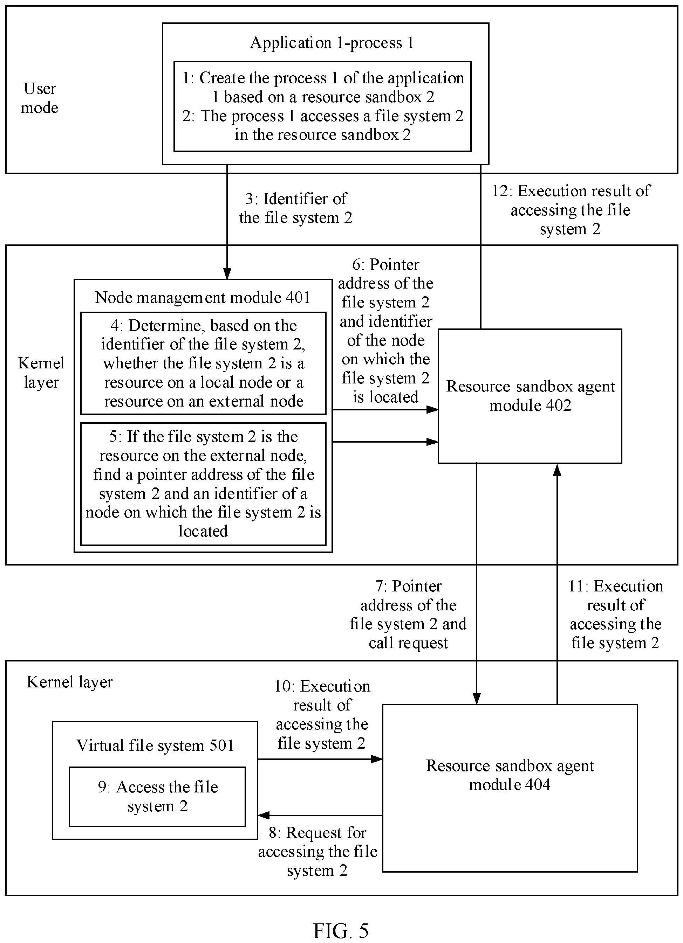

FIG. 5 is a diagram of an example of a procedure in which a node A accesses a file system resource on a node B. That the node A accesses the file system resource on the node B may include operations such as adding, deleting, searching, modifying, and reading a file in a file system on the node B, and may further include operations such as changing a structure of the file system on the node B.

The structure of the file system on the node B may be changed or the like by using a mounting operation. Mounting operation: When an operation such as addition, deletion, or changing needs to be performed on a node of a file system, a mounting operation needs to be performed.

The file in the file system may include a management system file resource and a data file system resource. The management system file resource is generally stored at a kernel layer, for example, a proc file system resource and a sys file system resource. The proc file system resource stores a pid file of a process. The data file system resource is generally stored outside the kernel layer.

The node A and the node B may be connected to a same network, for example, connected to a same local area network. When the node A is a server and the node B is a DPU, the node A and the node B may not be connected to a same network, and the node B may be directly inserted into the node A through a hardware interface (for example, a PCIe interface), so that the node A can directly communicate with the node B. Alternatively, the node A and the node B may communicate with each other in another manner. This is not limited in embodiments of this application.

The node A includes a node management module 401 and a resource sandbox agent module 402. The node B includes a resource sandbox agent module 404 and a virtual file system 501. Each of the node A and the node B may further include other functional modules. For example, the node A may further include a resource sandbox management module and resource sandboxes (not shown in FIG. 5), and the node B may also include a resource sandbox management module and resource sandboxes (not shown in FIG. 5). A function of the resource sandbox management module and descriptions of the resource sandboxes have been described in the embodiment in FIG. 3. Details are not described in embodiments of this application again.

As shown in FIG. 5, a method procedure in which the node A accesses the file system resource on the node B may be as follows:
1: After creating the resource sandboxes, the node A creates a process 1 of an application 1 based on a resource sandbox 2.
   The node A creates the process 1 of the application 1 based on the resource sandbox 2, and establishes a binding relationship between the process 1 and the resource sandbox 2.
2: The process 1 accesses a file system 2 in the resource sandbox 2.
3: The node A sends an identifier of the file system 2 to the node management module 401.
4: After receiving the identifier of the file system 2, the node management module 401 may be configured to determine, based on the identifier of the file system 2, whether a file system 2 called by a process II is a resource on the local node or a resource on an external node.

Specifically, the node management module 401 may determine, based on locally stored resource information in the resource sandboxes, whether the file system 2 is the resource on the local node or the resource on the external node. 5: If the node management module 401 determines that the file system 2 is the resource on the external node, the node management module 401 needs to find a pointer address of the file system 2 and an identifier of a node on which the file system 2 is located.

Optionally, step 5 may alternatively be performed by the process 1. This is not limited in embodiments of this application.

Based on the foregoing analysis, if the node management module 401 determines that the file system 2 is the resource on the external node, that the process 1 accesses the file system 2 on the node B may be divided into the operations such as adding, deleting, searching, modifying, and reading performed by the process 1 on the file in the file system on the node B. The process 1 may further perform the operations such as changing the structure of the file system on the node B. In this embodiment of this application, the structure of the file system on the node B may be changed or the like by using the mounting operation, to complete transfer of mounting information and display a latest status of the file system on the node B in real time, including file access at a new mount point. The node A invariably uses latest mount point information to access the file system on the node B. The node B can display the file system in the latest status, so that the node A can access the file system in the latest status on the node B.

Specifically, the node management module 401 may find, based on the locally stored resource information in the resource sandboxes, the pointer address of the file system 2 and the identifier of the node on which the file system 2 is located.

If the node management module 401 determines that the file system 2 is the resource on the local node, the node management module 401 directly sends a request for calling the file system on the local node to a virtual file system (virtual file system switch, VFS) on the node A. The node A accesses the file system 2 in the VFS based on a request for accessing the file system 2, and obtains an execution result of accessing the file system 2. Then, the VFS sends the execution result of accessing the file system 2 to the node management module 401, and the node management module 401 sends the execution result of accessing the file system 2 to the process 1 of the application 1.
6: The node management module 401 sends the pointer address of the file system 2 and the identifier of the node on which the file system 2 is located to the resource sandbox agent module 402.
7: The resource sandbox agent module 402 sends the pointer address of the file system 2 and the call request to the resource sandbox agent module 404 on the node B.

Optionally, the call request may include the pointer address of the file system 2, in other words, the resource sandbox agent module 402 needs to send only the call request to the resource sandbox agent module 404 on the node B.
8: After receiving the pointer address of the file system 2 and the call request, the resource sandbox agent module 404 sends the request for accessing the file system 2 to the virtual file system 501.
9: After receiving the request for accessing the file system 2, the virtual file system 501 accesses the file system 2, and obtains an execution result of accessing the file system 2.
10: The virtual file system 501 sends the execution result of accessing the file system 2 to the resource sandbox agent module 404.
11: The resource sandbox agent module 404 sends the execution result of accessing the file system 2 to the resource sandbox agent module 402.
12: The resource sandbox agent module 402 sends the execution result of accessing the file system 2 to the process 1 of the application 1.

It can be learned from the foregoing analysis that the file in the file system may include the management system file resource and the data file system resource. The management system file resource is generally stored at the kernel layer, for example, the proc file system resource and the sys file system resource. The proc file system resource stores the pid file of the process. The data file system resource is generally stored outside the kernel layer.

Due to a limitation on accessing a management system file resource at a kernel layer, a management system file at the kernel layer can be accessed only by a process created on a current node. If a process created on the node A accesses the management system file resource at the kernel layer on the node B, the access fails.

To overcome this problem, when the process on the node A accesses the management system file resource at the kernel layer on the node B across devices, a virtual process (which may also be referred to as a shadow process) is correspondingly created on the node B. In this way, when the process on the node A accesses the management system file resource at the kernel layer on the node B across devices, the shadow process on the node B accesses the management system file resource at the kernel layer on the node B.

The shadow process has only a process identifier and does not have an actual running activity.

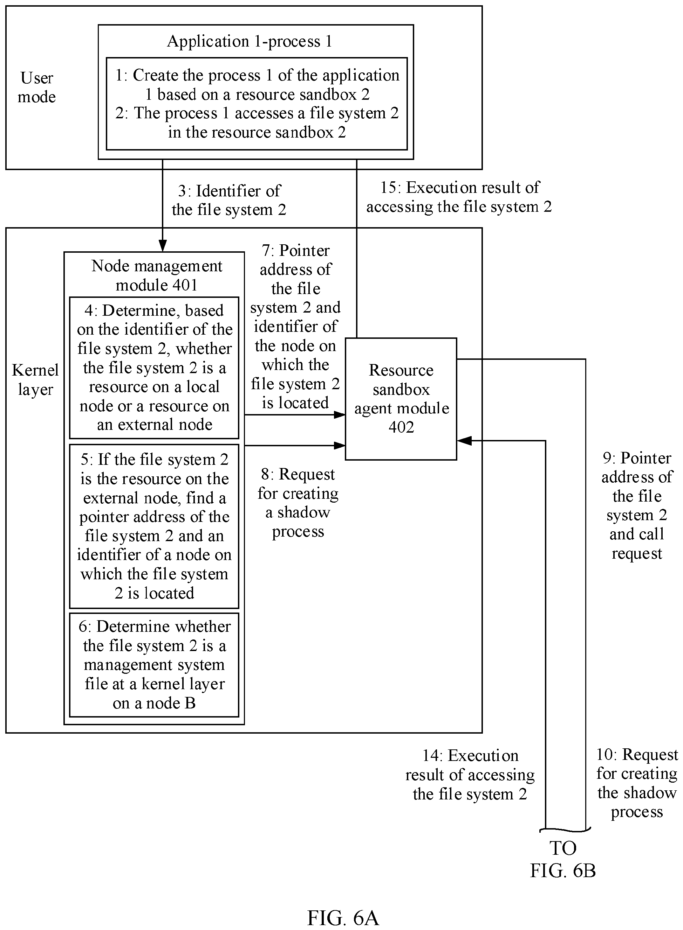

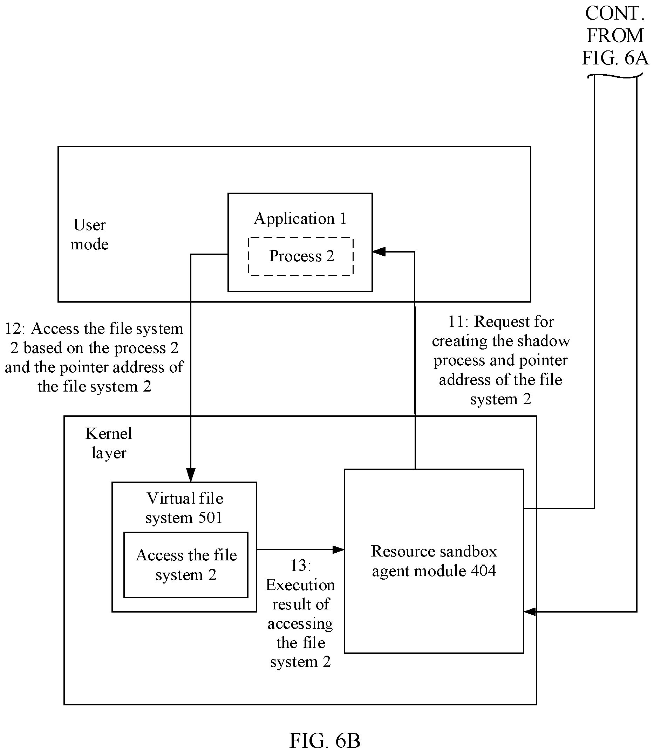

FIG. 6A and FIG. 6B are a diagram of an example of a procedure in which a node A accesses a system file resource on a node B over a shadow process.

As shown in FIG. 5, a method procedure in which the node A accesses the file system resource on the node B may be as follows:
1: After creating resource sandboxes, the node A creates a process 1 of an application 1 based on a resource sandbox 2.
   The node A creates the process 1 of the application 1 based on the resource sandbox 2, and establishes a binding relationship between the process 1 and the resource sandbox 2.
2: The process 1 accesses a file system 2 in the resource sandbox 2.
3: The node A sends an identifier of the file system 2 to a node management module 401.
4: After receiving the identifier of the file system 2, the node management module 401 may be configured to determine, based on the identifier of the file system 2, whether a file system 2 called by a process II is a resource on the local node or a resource on an external node.

Specifically, the node management module 401 may determine, based on locally stored resource information in the resource sandboxes, whether the file system 2 is the resource on the local node or the resource on the external node. 5: If the node management module 401 determines that the file system 2 is the resource on the external node, the node management module 401 needs to find a pointer address of the file system 2 and an identifier of a node on which the file system 2 is located.

Based on the foregoing analysis, if the node management module 401 determines that the file system 2 is the resource on the external node, the process 1 accesses the file system 2 on the node B. That the node A accesses the file system resource on the node B may include operations such as adding, deleting, searching, modifying, and reading a file in a file system on the node B, and may further include operations such as changing a structure of the file system on the node B. The structure of the file system on the node B may be changed or the like by using a mounting operation. Mounting operation: When an operation such as addition, deletion, or changing needs to be performed on a node of a file system, a mounting operation needs to be performed. In this embodiment of this application, the file system on the node B is accessed by using the mounting operation, to complete transfer of mounting information and display a latest status of the file system on the node B in real time, including file access at a new mount point.

Specifically, the node management module 401 may find, based on the locally stored resource information in the resource sandboxes, the pointer address of the file system 2 and the identifier of the node on which the file system 2 is located.

If the node management module 401 determines that the file system 2 is the resource on the local node, the node management module 401 directly sends a request for calling a file system on the local node to a virtual file system (virtual file system switch, VFS) on the node A. The node A accesses the file system 2 in the VFS based on a request for accessing the file system 2, and obtains an execution result of accessing the file system 2. Then, the VFS sends the execution result of accessing the file system 2 to the node management module 401, and the node management module 401 sends the execution result of accessing the file system 2 to the process 1 of the application 1.

6: The node management module 401 further needs to determine whether the file system 2 is a management system file at a kernel layer on the node B.

Optionally, step 6 may alternatively be performed by the process 1. This is not limited in embodiments of this application.

If the file system 2 is the management system file at the kernel layer on the node B, the process 1 on the node A cannot directly access the file system 2 on the node B. In this case, the node A needs to indicate the node B to create a shadow process on the node B, so that the node A can normally access the file system 2 on the node B.
7: The node management module 401 sends the pointer address of the file system 2 and the identifier of the node on which the file system 2 is located to a resource sandbox agent module 402.
8: The node management module 401 sends a request for creating the shadow process to the resource sandbox agent module 402.
9: The resource sandbox agent module 402 sends the pointer address of the file system 2 and the call request to a resource sandbox agent module 404 on the node B.

Optionally, the call request may include the pointer address of the file system 2, in other words, the resource sandbox agent module 402 needs to send only the call request to the resource sandbox agent module 404 on the node B.
10: The resource sandbox agent module 402 sends the request for creating the shadow process to the resource sandbox agent module 404 on the node B.
11: The resource sandbox agent module 404 sends the pointer address of the file system 2 and the request for creating the shadow process to an application 1 on the node B.
12: The application 1 on the node B accesses the file system 2 based on a process 2 and the pointer address of the file system 2.

After receiving the request for creating the shadow process, the application 1 on the node B creates the shadow process (for example, the process 2, as shown by a dashed line in FIG. 6A and FIG. 6B) of the application 1.

The process 2 is a virtual process, has a unique process identifier, but has no actual running activity.

The application 1 on the node B associates the process identifier of the process 2 with a process identifier of the process 1, to establish a one-to-one association relationship.

The node B accesses the file system 2 on the node B based on the process 2 (namely, the shadow process), for example, a proc file system resource and a sys file system resource. In this way, the node B considers that the process 2 is a newly created process on the node B, and a case in which the process 2 cannot access the file system 2 on the node B does not occur.
13: A virtual file system 501 sends an execution result of accessing the file system 2 to the resource sandbox agent module 404.
14: The resource sandbox agent module 404 sends the execution result of accessing the file system 2 to the resource sandbox agent module 402.
15: The resource sandbox agent module 402 sends the execution result of accessing the file system 2 to the process 1 of the application 1.

The following describes a specific implementation in which the node A accesses the network resource on the node B. That the node A accesses the network resource on the node B may be that the node A accesses a network interface card, a communication address, a communication protocol, or the like on the node B. This is not limited in embodiments of this application. The following embodiments of this application are described by using an example in which the node A accesses the communication protocol on the node B.

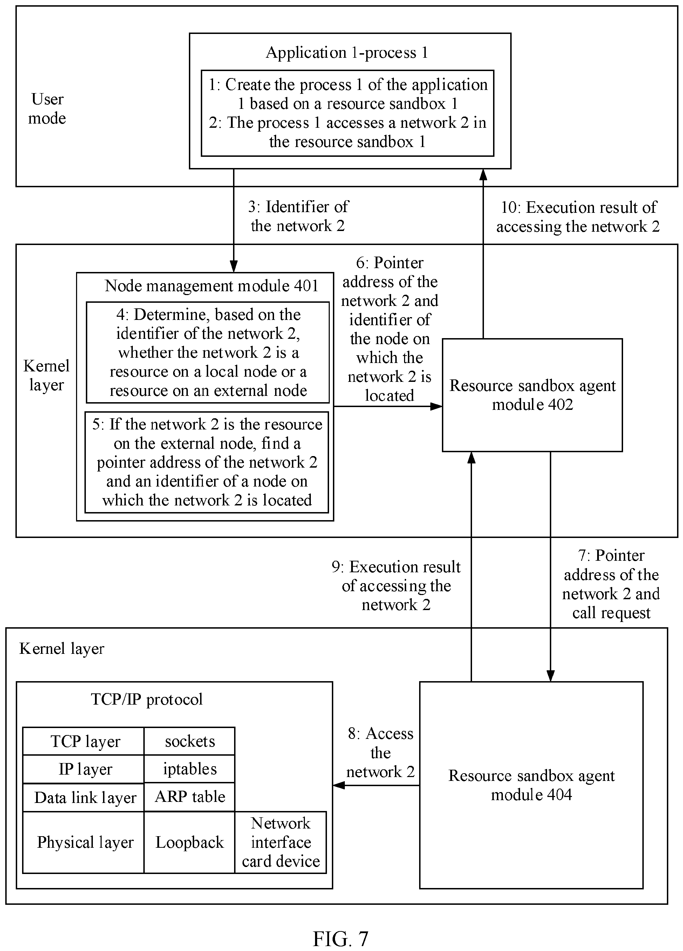

FIG. 7 is a diagram of an example of a procedure in which a node A accesses a communication protocol on a node B. The node A and the node B may be connected to a same network, for example, connected to a same local area network. When the node A is a server and the node B is a DPU, the node A and the node B may not be connected to a same network, and the node B may be directly inserted into the node A through a hardware interface (for example, a PCIe interface), so that the node A can directly communicate with the node B. Alternatively, the node A and the node B may communicate with each other in another manner. This is not limited in embodiments of this application.

The node A includes a node management module 401 and a resource sandbox agent module 402. The node B includes a resource sandbox agent module 404. Each of the node A and the node B may further include other functional modules. For example, the node A may further include a resource sandbox management module and resource sandboxes (not shown in FIG. 7), and the node B may also include a resource sandbox management module and resource sandboxes (not shown in FIG. 7). A function of the resource sandbox management module and descriptions of the resource sandboxes have been described in the embodiment in FIG. 3. Details are not described in embodiments of this application again.

As shown in FIG. 7, a method procedure in which the node A accesses a network resource on the node B may be as follows:
1: After creating the resource sandboxes, the node A creates a process 1 of an application 1 based on a resource sandbox 1.
   The node A creates the process 1 of the application 1 based on the resource sandbox 1, and establishes a binding relationship between the process 1 and the resource sandbox 1.
2: The process 1 accesses a network 2 in the resource sandbox 1.
   For example, the network 2 may be a TCP/IP protocol, or the network 2 may be another network resource, for example, a network interface card or a communication address on the node B. This is not limited in embodiments of this application.
3: The node A sends an identifier of the network 2 to the node management module 401.
4: After receiving the identifier of the network 2, the node management module 401 may be configured to determine, based on the identifier of the network 2, whether a network 2 called by a process II is a resource on the local node or a resource on an external node.
   Specifically, the node management module 401 may determine, based on locally stored resource information in the resource sandboxes, whether the network 2 is the resource on the local node or the resource on the external node.
5: If the node management module 401 determines that the network 2 is the resource on the external node, the node management module 401 needs to find a pointer address of the network 2 and an identifier of a node on which the network 2 is located.

Optionally, step 5 may alternatively be performed by the process 1. This is not limited in embodiments of this application.

Specifically, the node management module 401 may find, based on the locally stored resource information in the resource sandboxes, the pointer address of the network 2 and the identifier of the node on which the network 2 is located.

If the node management module 401 determines that the network 2 is the resource on the local node, the node management module 401 directly accesses a TCP/IP protocol on the local node, and obtains an execution result of accessing the TCP/IP protocol. Then, the node management module 401 sends the execution result of accessing the TCP/IP protocol to the process 1 of the application 1.
6: The node management module 401 sends the pointer address of the network 2 and the identifier of the node on which the network 2 is located to the resource sandbox agent module 402.
7: The resource sandbox agent module 402 sends the pointer address of the network 2 and a call request to the resource sandbox agent module 404 on the node B.

Optionally, the call request may include the pointer address of the network 2, in other words, the resource sandbox agent module 402 needs to send only the call request to the resource sandbox agent module 404 on the node B.

8: After receiving the pointer address of the network 2 and the call request, the resource sandbox agent module 404 directly accesses the network 2 on the node B, and obtains an execution result of accessing the network 2.

For example, the resource sandbox agent module 404 directly accesses a TCP/IP protocol on the node B, and obtains an execution result of accessing the TCP/IP protocol.

For example, the TCP/IP protocol includes a TCP layer, an IP layer, a data link layer, and a physical layer. The TCP layer may include a socket (socket), the IP layer may include iptables, the data link layer may include an ARP table, and the physical layer may include loopback, a network interface card device, and the like.
9: The resource sandbox agent module 404 sends the execution result of accessing the network 2 to the resource sandbox agent module 402.
10: The resource sandbox agent module 402 sends the execution result of accessing the network 2 to the process 1 of the application 1.

The following describes a specific implementation in which the node A accesses the IPC resource on the node B.

Before the node A accesses the IPC resource on the node B, the node B needs to create an IPC instance. The IPC instance is any one of the following: a pipe, a message queue, semaphore, a shared memory, a socket, and the like. Then, the node B notifies, of an identifier of the created IPC instance, another node that uses a consistent IPC classification number in a cluster in which the node B is located. After the another node receives the identifier that is of the IPC instance and that is sent by the node B, a process on the another node may communicate with a process on the node B based on the IPC instance created by the node B.

If an IPC instance is created on the node A, when a process on another node needs to access the IPC instance created on the node A, the another node needs to send a call request to the node A to access the IPC instance created on the node A. However, a process on the node A may directly access the IPC instance created on the node A.

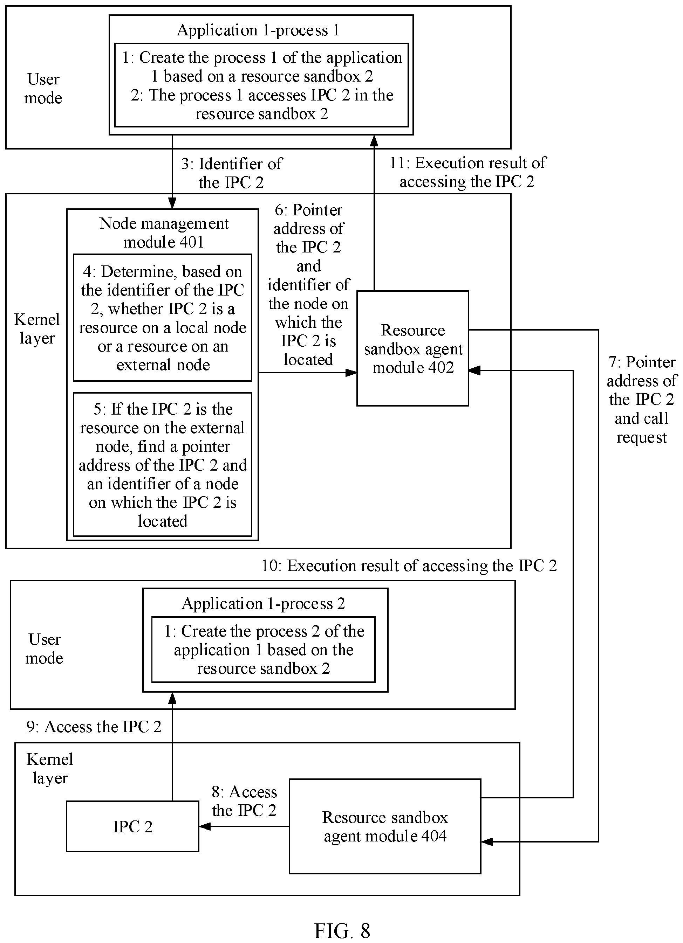

FIG. 8 is a diagram of an example of a procedure in which a node A accesses an IPC instance resource on a node B. The node A and the node B may be connected to a same network, for example, connected to a same local area network.

When the node A is a server and the node B is a DPU, the node A and the node B may not be connected to a same network, and the node B may be directly inserted into the node A through a hardware interface (for example, a PCIe interface), so that the node A can directly communicate with the node B. Alternatively, the node A and the node B may communicate with each other in another manner. This is not limited in embodiments of this application.

The node A includes a node management module 401 and a resource sandbox agent module 402. The node B includes a resource sandbox agent module 404. Each of the node A and the node B may further include other functional modules. For example, the node A may further include a resource sandbox management module and resource sandboxes (not shown in FIG. 7), and the node B may also include a resource sandbox management module and resource sandboxes (not shown in FIG. 7). A function of the resource sandbox management module and descriptions of the resource sandboxes have been described in the embodiment in FIG. 3. Details are not described in embodiments of this application again.

As shown in FIG. 8, a method procedure in which the node A accesses the IPC resource on the node B may be as follows:
1: After creating the resource sandboxes, the node A creates a process 1 of an application 1 based on a resource sandbox 2.

The node A creates the process 1 of an application 1 based on the resource sandbox 2, and establishes a binding relationship between the process 1 and the resource sandbox 2.

The node B creates a process 2 of the application 1 based on the resource sandbox 2, and establishes a binding relationship between the process 2 and the resource sandbox 2.

2: The process 1 accesses IPC 2 in the resource sandbox 2.

The IPC 2 is an IPC instance created by the node B, and the IPC 2 is any one of the following: a pipe, a message queue, semaphore, a shared memory, a socket, and the like.
3: The node A sends an identifier of the IPC 2 to the node management module 401.
4: After receiving the identifier of the IPC 2, the node management module 401 may be configured to determine, based on the identifier of the IPC 2, whether IPC 2 called by a process II is a resource on the local node or a resource on an external node.

Specifically, the node management module 401 may determine, based on locally stored resource information in the resource sandboxes, whether the IPC 2 is the resource on the local node or the resource on the external node.

5: If the node management module 401 determines that the IPC 2 is the resource on the external node, the node management module 401 needs to find a pointer address of the IPC 2 and an identifier of a node on which the IPC 2 is located.

Optionally, step 5 may alternatively be performed by the process 1. This is not limited in embodiments of this application.

Specifically, the node management module 401 may find, based on the locally stored resource information in the resource sandboxes, the pointer address of the IPC 2 and the identifier of the node on which the IPC 2 is located.
6: The node management module 401 sends the pointer address of the IPC 2 and the identifier of the node on which the IPC 2 is located to the resource sandbox agent module 402.
7: The resource sandbox agent module 402 sends the pointer address of the IPC 2 and a call request to the resource sandbox agent module 404 on the node B.

Optionally, the call request may include the pointer address of the IPC 2, in other words, the resource sandbox agent module 402 needs to send only the call request to the resource sandbox agent module 404 on the node B.
8: After receiving the pointer address of the IPC 2 and the call request, the resource sandbox agent module 404 directly accesses the IPC 2 on the node B, and obtains an execution result of accessing the IPC 2.
9: The process 2 on the node B accesses the IPC 2, and obtains an execution result of accessing the IPC 2.

In some embodiments, the resource sandbox agent module 404 may write data to the IPC 2, and the process 2 on the node B reads the data from the IPC 2. In this case, step 8 is performed before step 9.

In some embodiments, the process 2 on the node B writes data to the IPC 2, and the resource sandbox agent module 404 may read the data from the IPC 2. In this case, step 8 is performed after step 9. Step 9 may be performed at any moment after step 1 and before step 8. This is not limited in embodiments of this application.
10: The resource sandbox agent module 404 sends the execution result of accessing the IPC 2 to the resource sandbox agent module 402.
11: The resource sandbox agent module 402 sends the execution result of accessing the IPC 2 to the process 1 of the application 1.

The foregoing embodiments describe the implementation procedures of calling resources on the remote node across nodes. For example, the node A calls the file system resource, the network resource, the IPC resource, and the like on the node B. An embodiment of this application further provides another process migration method, to be specific, a process running on the node A is migrated to the node B for running, to reduce computing pressure of the node A and use a good network resource or device resource on the node B, thereby improving service execution efficiency.

For example, a management plane process and a service process run on the node A, the management plane process on the node A may be migrated to the node B for running, and only the service process is retained on the node A, to improve service execution efficiency.

Currently, process migration is mainly to split processes between processes. Therefore, a code layer needs to be modified to extract code of the management plane process and place the code on the node B for running. This brings a large amount of code adaptation work. In addition, code needs to be split for different components or processes, which undoubtedly increases workload of a developer.

Based on this, an embodiment of this application further provides a process splitting method. Some processes can be migrated to another node without splitting or changing process code, thereby reducing the computing pressure of the node A.

A process migration technology provided in embodiments of this application may be applied to execution of a distributed computing task of an artificial intelligence (artificial intelligence, AI) or high performance computing (high performance computing) service in a data center scenario. When a large quantity of nodes in a data center form a single cluster, for an AI or HPC big data computing task, the entire cluster may be regarded as a single host that runs computing tasks. The computing tasks do not sense differences between the nodes but use a same resource view. Therefore, even if computing task entity processes run on different compute nodes, resource entities used by any process may be distributed on different nodes in a computing center, to fully use an advantageous resource on each node in the cluster, so as to greatly improve service execution efficiency.

Not limited to process migration, this solution may also be applicable to thread migration. A specific implementation of thread migration is similar to a specific implementation principle of the process. Details are not described in embodiments of this application again. For details, refer to the detailed descriptions of the process migration procedure. There are two cases in which the node A migrates the process on the node A to the node B. In one case, the process has been created and run on the node A, and then the node A migrates the running process to the node B for running. In the other case, the process is not created on the node A. The node A indicates the node B to create a new process when the node A is about to create the new process.

The following separately describes how the node A migrates the process to the node B with reference to the foregoing two cases.

First, a specific implementation in which the node A migrates the created process to the node B is described.

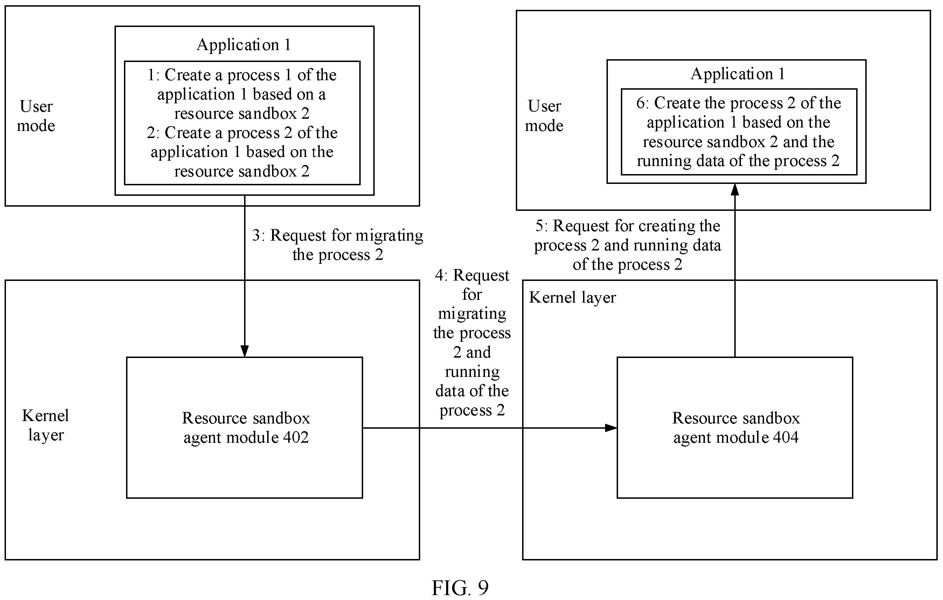

As shown in FIG. 9, a method procedure in which a node A migrates a created process to a node B for running may be as follows:
1: After creating resource sandboxes, the node A creates a process 1 of an application 1 based on a resource sandbox 2.
   The node A creates the process 1 of the application 1 based on the resource sandbox 2, and establishes a binding relationship between the process 1 and the resource sandbox 2.
2: After creating the resource sandboxes, the node A creates a process 2 of the application 1 based on the resource sandbox 2.

The node A creates the process 2 of the application 1 based on the resource sandbox 2, and establishes a binding relationship between the process 2 and the resource sandbox 2.

The process 1 and the process 2 may communicate with each other, or the process 1 and the process 2 may not communicate with each other. This is not limited in embodiments of this application.

Alternatively, the process 1 and the process 2 may be two processes in different applications. This is not limited in embodiments of this application.

3: The application 1 sends a request for migrating the process 2 to a resource sandbox agent module 402.

After obtaining the request for migrating the process 2, the resource sandbox agent module 402 obtains running data of the process 2. The running data of the process 2 includes but is not limited to: an identifier of a resource sandbox in which the process 2 is located, temporary data generated by the process 2, a resource accessed by the process 2, and the like.

4: The resource sandbox agent module 402 sends the request for migrating the process 2 and the running data of the process 2 to a resource sandbox agent module 404 on the node B.

Optionally, the request for migrating the process 2 may include the running data of the process 2, in other words, the resource sandbox agent module 402 needs to send only the request for migrating the process 2 to the resource sandbox agent module 404 on the node B.
5: The resource sandbox agent module 404 forwards a request for creating a process 2 and the running data of the process 2 to an application 1 on the node B.
6: After receiving the request for creating the process 2 and the running data of the process 2, the application 1 creates the process 2 based on the resource sandbox 2 and the running data of the process 2.

After the process 2 on the node B is created, the resource sandbox agent module 404 may send information to the resource sandbox agent module 402, and then the resource sandbox agent module 402 forwards the message to the application 1. The information is used to notify the resource sandbox agent module 402 that the process 2 has been created on the node B.

In this way, the process 1 runs on the node A, and the process 2 runs on the node B, thereby implementing process migration.

The following describes a specific implementation in which the node A indicates the node B to create the new process when the node A is about to create the new process.

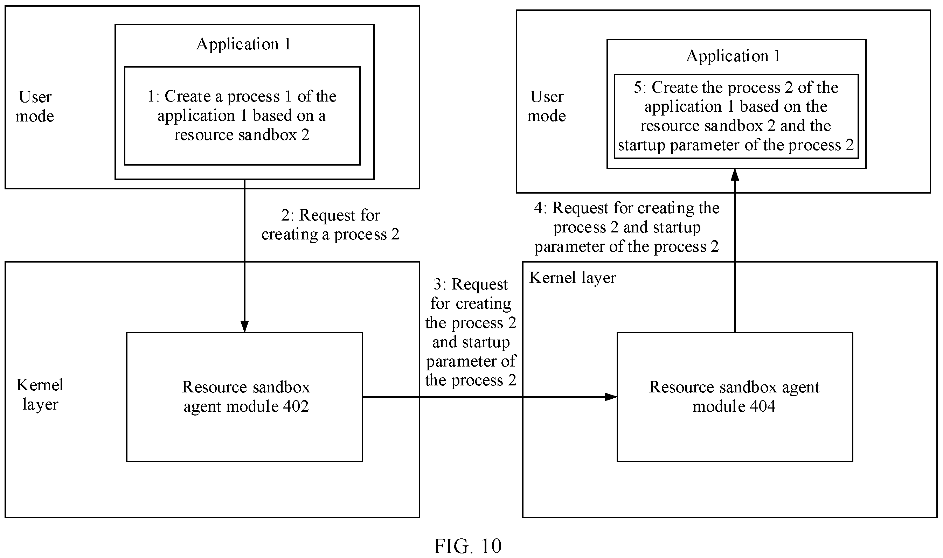

As shown in FIG. 10, a method procedure in which a node A indicates a node B to create a new process when the node A is about to create the new process may be as follows:
1: After creating resource sandboxes, the node A creates a process 1 of an application 1 based on a resource sandbox 2.

The node A creates the process 1 of the application 1 based on the resource sandbox 2, and establishes a binding relationship between the process 1 and the resource sandbox 2.

2: When the node A is about to create a process 2 of the application 1, the application 1 sends a request for creating a process 2 to a resource sandbox agent module 402.

The process 1 and the process 2 may communicate with each other, or the process 1 and the process 2 may not communicate with each other. This is not limited in embodiments of this application.

Alternatively, the process 1 and the process 2 may be two processes in different applications. This is not limited in embodiments of this application.

3: The resource sandbox agent module 402 sends the request for creating the process 2 and a startup parameter of the process 2 to a resource sandbox agent module 404.

Optionally, the request for creating the process 2 may include the startup parameter of the process 2, in other words, the resource sandbox agent module 402 needs to send only the request for creating the process 2 to the resource sandbox agent module 404 on the node B.

After obtaining the request for creating the process 2, the resource sandbox agent module 402 obtains the startup parameter of the process 2. The startup parameter of the process 2 includes but is not limited to: an identifier of a resource sandbox in which the process 2 is located, a function of the process 2, a resource accessed by the process 2, and the like.

The resource sandbox agent module 402 sends the request for creating the process 2 and the startup parameter of the process 2 to the resource sandbox agent module 404.
4: The resource sandbox agent module 404 forwards the request for creating the process 2 and the startup parameter of the process 2 to an application 1 on the node B.
5: After receiving the request for creating the process 2 and the startup parameter of the process 2, the application 1 creates the process 2 based on the resource sandbox 2 and the startup parameter of the process 2.

After the process 2 on the node B is created, the resource sandbox agent module 404 may send information to the resource sandbox agent module 402, and then the resource sandbox agent module 402 forwards the message to the application 1. The information is used to notify the resource sandbox agent module 402 that the process 2 has been created on the node B.

In this way, the process 1 runs on the node A, and the process 2 runs on the node B, thereby implementing process migration.

It should be noted that, according to the process migration methods provided in FIG. 9 and FIG. 10, the node B needs to create the process 2 based on the resource sandbox 2, and establish a binding relationship between the process 2 on the node B and the resource sandbox 2. In this way, the processes are created based on the same resource sandbox and the processes are run on the two different nodes, so that the two processes can normally sense and interact with each other to complete a normal service function. In this way, the processes can be migrated without code modification and run on different compute nodes.

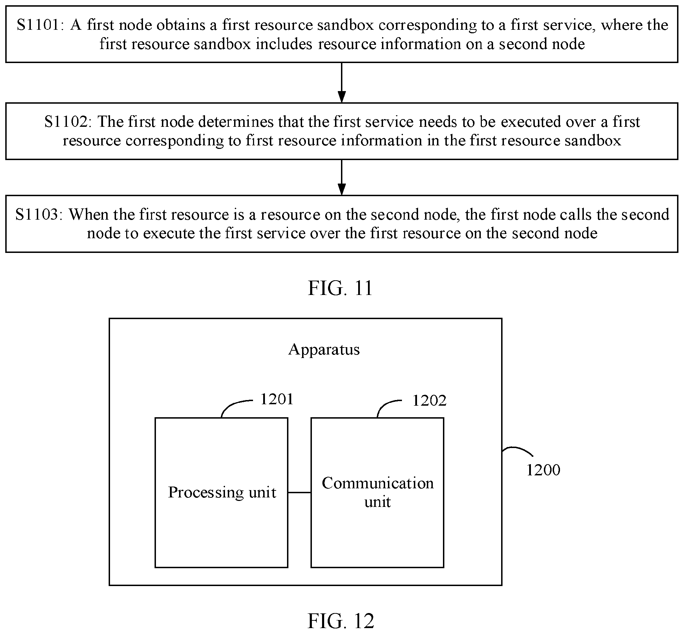

FIG. 11 is a method schematic flowchart of a distributed resource sharing method according to an embodiment of this application.

S1101: A first node obtains a first resource sandbox corresponding to a first service, where the first resource sandbox includes resource information on a second node.

The first node may be the node A described in the foregoing embodiment, and the second node may be the node B described in the foregoing embodiment.

S1102: The first node determines that the first service needs to be executed over a first resource corresponding to first resource information in the first resource sandbox.

When the first node determines that the first service needs to be executed over the first resource corresponding to the first resource information in the first resource sandbox, that is, the first node has not executed the first service, the first node only determines that the first service is executed over the first resource corresponding to the first resource information in the first resource sandbox.

That the first node determines that the first service needs to be executed over a first resource corresponding to first resource information in the first resource sandbox specifically includes: The first node determines that a first process of the first service needs to be executed over the first resource corresponding to the first resource information in the first resource sandbox. The first process may be the process 1 on the node A described in the foregoing embodiment. The first resource information may be one or more of resource information of the file system 2, resource information of the network 2, resource information of the hardware device 2, resource information of the IPC 2, and resource information of the memory 2 described in the foregoing embodiment.

The first resource sandbox may be the resource sandbox 1 in the embodiment in FIG. 4A and FIG. 4B. For how the first node obtains the first resource sandbox, refer to the related descriptions in the embodiment in FIG. 4A and FIG. 4B. Details are not described in embodiments of this application again.

The first resource is any one of the file system 2, the network 2, the hardware device 2, the IPC 2, and the memory 2. Alternatively, the first resource is any one of the file system 1, the network 1, the hardware device 1, the IPC 1, and the memory 1.

In a possible implementation, a resource type of the first resource is any one of the following: a system file resource, a device resource, a network resource, an inter-process communication resource, and a memory resource.

Second resource information may be one or more of the file system 1, the network 1, the hardware device 1, the IPC 1, and the memory 1 described in the foregoing embodiment.

In a possible implementation, the first resource sandbox includes third resource information, and a resource type of a third resource corresponding to the third resource information is the same as the resource type of the first resource. Before the first node obtains the first resource sandbox corresponding to the first service, the method further includes: When the first node determines that performance of the first resource is higher than performance of the third resource, the first node generates the first resource sandbox based on the first resource information. In this way, a node may select resources with higher performance from a plurality of resources of a same type to form a resource sandbox, that is, an advantageous resource on each node is used, to improve service execution efficiency. In this way, the first node combines resources on other nodes, and may select a resource with better performance from a plurality of resources of a same type to form the first resource sandbox. This reflects a procedure of integrating advantageous resources.

The third resource is any one of the file system 1, the network 1, the hardware device 1, the IPC 1, and the memory 1.

S1103: When the first resource is a resource on the second node, the first node calls the second node to execute the first service over the first resource on the second node.

That the first node calls the second node to execute the first service over the first resource on the second node specifically includes: The first node sends a first request to the second node, where the first request is used to request the second node to execute the first service over the first resource on the second node; and the first node receives an execution result that is sent by the second node and that is of executing the first service over the first resource.

The first request may be the call request in step 8 shown in FIG. 4A and FIG. 4B, or may be the call request in step 7 shown in FIG. 5, or may be the call request in step 9 shown in FIG. 6A and FIG. 6B, or may be the call request in step 7 shown in FIG. 7, or may be the call request in step 7 shown in FIG. 8.

In a possible implementation, the first resource sandbox further includes resource information on the first node; and the method further includes: When the first resource is a resource on the first node, the first node locally accesses the first resource over the first process.

For a specific implementation of how the first node calls the first resource on the second node, refer to the related descriptions in FIG. 5, FIG. 7, and FIG. 8. Details are not described in embodiments of this application again.

In a possible implementation, before the first node determines that the first service needs to be executed over the first resource corresponding to the first resource information in the first resource sandbox, the method further includes: The first node sends a third request to the second node, where the third request is used to request the second node to create a first virtual process, and the first virtual process is used by the second node to execute, based on the first virtual process, the first service over the first resource on the second node. In this way, when the first resource is a file resource on the second node, because of permission setting for accessing the file resource, only a local process can access the file resource. To avoid a case in which a process I on the first node fails to call the file resource on the second node, a virtual process is created on the second node, and the virtual process accesses the file resource on the second node. For details, refer to the related descriptions in the embodiment in FIG. 6A and FIG. 6B. Details are not described in embodiments of this application again.

The first virtual process may be the shadow process in the embodiment shown in FIG. 6A and FIG. 6B.

The third request may be the request for creating the shadow process in step 10 in the embodiment shown in FIG. 6A and FIG. 6B.

Optionally, the first node may migrate a process on the first node to the second node for execution, to reduce computing pressure on the first node and improve service execution efficiency.

In a possible implementation, the method further includes: The first node determines that a second process of the first service needs to be executed over a second resource corresponding to second resource information in the first resource sandbox; the first node sends a second request to the second node, where the second request is used to request the second node to run the second process, and the second request includes running data of the second process; and the first node stops running the second process.

The running data of the second process includes but is not performed on: an identifier of a resource sandbox in which the second process is located, temporary data generated during running of the second process, a resource accessed by the second process, and the like.

In another possible implementation, after receiving the second request, the second node creates the second process based on the first resource sandbox. That is, processes are created based on a same resource sandbox and the processes are run on two different nodes, so that the two processes can normally sense and interact with each other, to complete a normal service function. Processes can be migrated without code modification and run on different compute nodes. The second request may be the request for migrating the process 2 in step 4 in the embodiment shown in FIG. 9.

In a possible implementation, after the first node determines that the first process of the first service needs to be executed over the first resource corresponding to the first resource information in the first resource sandbox, the method further includes: The first node obtains a first instruction, where the first instruction is used to run a second process of the first service; and the first node sends a second request to the second node in response to the first instruction, where the second request is used to request the second node to run the second process, and the second request includes a startup parameter of the second process. The startup parameter of the second process includes but is not limited to: an identifier of a resource sandbox in which the second process is located, a function of the second process, a resource accessed by the second process, and the like.

In another possible implementation, after receiving the second request, the second node creates the second process based on the first resource sandbox. That is, processes are created based on a same resource sandbox and the processes are run on two different nodes, so that the two processes can normally sense and interact with each other, to complete a normal service function. Processes can be migrated without code modification and run on different compute nodes. The second request may be the request for creating the process 2 in step 3 in the embodiment shown in FIG. 10. For how the first node migrates the first process to the second node, refer to the related descriptions in embodiments in FIG. 9 and FIG. 10. Details are not described in embodiments of this application again.

In a possible implementation, before the first node calls the second node to execute the first service over the first resource on the second node, the method further includes: The first node synchronizes resource information in the first resource sandbox to the second node. In this way, a resource sandbox before a node is shared, which makes it possible to migrate a process on the node. To be specific, the resource sandbox is shared between the nodes, so that the second node establishes binding management between the second process running on the second node and the first resource sandbox. In this way, the processes are created based on the same resource sandbox and the processes are run on the two different nodes, so that the two processes can normally sense and interact with each other, to complete the normal service function. In this way, the processes can be migrated without code modification and run on different compute nodes.

The foregoing describes in detail the methods in embodiments of this application. The following provides apparatuses in embodiments of this application.

FIG. 12 is a diagram of a structure of a distributed resource sharing apparatus according to an embodiment of this application. An apparatus 1200 may be a server, a DPU, or the like. The apparatus 1200 is configured to implement the foregoing method for implementing resource sharing, for example, the method for implementing distributed resource sharing in the embodiment shown in FIG. 11.

In a possible implementation, the apparatus 1200 may include a processing unit 1201 and a communication unit 1202. The processing unit 1201 is configured to obtain a first resource sandbox corresponding to a first service, where the first resource sandbox includes resource information on a second node.

The processing unit 1201 is further configured to determine that the first service needs to be executed over a first resource corresponding to first resource information in the first resource sandbox.

The communication unit 1202 is further configured to: when the first resource is a resource on the second node, send a first request to the second node, where the first request is used to request to access the first resource on the second node.

The communication unit 1202 is configured to: when the first resource is the resource on the second node, call, by the first node, the second node to execute the first service over the first resource on the second node. This can implement node resource sharing and cross-device resource access, thereby implementing high-quality resource sharing and improving computing performance and service execution efficiency.

In a possible implementation, the processing unit is specifically configured to determine that a first process of the first service needs to be executed over the first resource corresponding to the first resource information in the first resource sandbox; and the communication unit is specifically configured to: send the first request to the second node, where the first request is used to request the second node to execute the first service over the first resource on the second node; and receive an execution result that is sent by the second node and that is of executing the first service over the first resource.

In a possible implementation, the processing unit 1201 is further configured to determine that a second process of the first service needs to be executed over a second resource corresponding to second resource information in the first resource sandbox; the communication unit 1202 is further configured to send a second request to the second node, where the second request is used to request the second node to run the second process, and the second request includes running data of the second process; and the processing unit 1201 is further configured to stop running the second process.

In a possible implementation, the processing unit 1201 is further configured to obtain a first instruction, where the first instruction is used to run a second process of the first service; and the communication unit 1202 is further configured to send a second request to the second node in response to the first instruction, where the second request is used to request the second node to run the second process, and the second request includes a startup parameter of the second process.

In a possible implementation, the communication unit 1202 is further configured to synchronize resource information in the first resource sandbox to the second node.

In a possible implementation, the first resource sandbox includes third resource information, and a resource type of a third resource corresponding to the third resource information is the same as a resource type of the first resource; and the processing unit 1201 is further configured to: when the first node determines that performance of the first resource is higher than performance of the third resource, generate the first resource sandbox based on the first resource information.

In a possible implementation, the first resource sandbox further includes resource information on the first node; and the processing unit 1201 is further configured to: when the first resource is a resource on the first node, locally access the first resource over a first process.

In a possible implementation, the resource type of the first resource is any one of the following: a system file resource, a device resource, a network resource, an inter-process communication resource, and a memory resource.

In a possible implementation, the communication unit 1202 is further configured to send a third request to the second node, where the third request is used to request the second node to create a first virtual process, and the first virtual process is used by the second node to execute, based on the first virtual process, the first service over the first resource on the second node.

It should be understood that for related descriptions, refer to the descriptions in the embodiment shown in FIG. 11. Details are not described herein again.

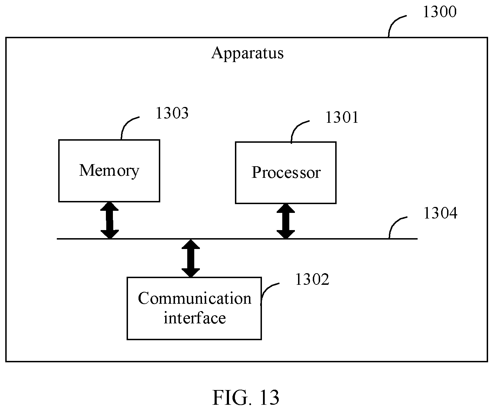

FIG. 13 is a diagram of a structure of an apparatus 1300 according to an embodiment of this application. The apparatus 1300 may be a server, a DPU, or the like. The apparatus 1300 may include at least one processor 1301, and optionally, may further include at least one memory 1303. Further optionally, the apparatus 1300 may further include a communication interface 1302, and further optionally, may further include a bus 1304. The processor 1301, the communication interface 1302, and the memory 1303 are connected through the bus 1304.

The processor 1301 is a module that performs an arithmetic operation and/or a logical operation, and may be specifically one or a combination of a plurality of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), a complex programmable logic device (Complex programmable logic device, CPLD), a coprocessor (assisting the central processing unit in completing corresponding processing and application), and a microcontroller unit (Microcontroller Unit, MCU).

The communication interface 1302 may be configured to provide an information input or output for the at least one processor, and/or the communication interface 1302 may be configured to receive data sent from an outside and/or send data to the outside, and may be a wired link interface including an Ethernet cable and the like, or may be a wireless link (Wi-Fi, Bluetooth, universal wireless transmission, an in-vehicle short-distance communication technology, or the like) interface. Optionally, the communication interface 1302 may further include a transmitter (for example, a radio frequency transmitter or an antenna), a receiver, or the like coupled to the interface.

The memory 1303 is configured to provide storage space, and the storage space may store data such as an operating system and a computer program. The memory 1303 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

The at least one processor 1301 in the apparatus 1300 is configured to perform the foregoing method for implementing resource sharing, for example, the published resource sharing method described in the embodiment shown in FIG. 11. Optionally, the processor 1301 may be a processor (referred to as a special-purpose processor for ease of differentiation) that is specially configured to perform the foregoing methods, or may be a processor that calls a computer program to perform the foregoing methods, for example, a general-purpose processor. Optionally, the at least one processor may further include both a special-purpose processor and a general-purpose processor.

In a possible implementation, the at least one processor 1301 in the apparatus 1300 is configured to call computer instructions, to perform the following operations:
The processor 1301 is configured to obtain a first resource sandbox corresponding to a first service, where the first resource sandbox includes resource information on a second node;
the processor 1301 is further configured to determine that the first service needs to be executed over a first resource corresponding to first resource information in the first resource sandbox; and
the processor 1301 is further configured to: when the first resource is a resource on the second node, send a first request to the second node through the communication interface 1302, where the first request is used to request to access the first resource on the second node. This can implement node resource sharing and cross-device resource access, thereby implementing high-quality resource sharing and improving computing performance and service execution efficiency.

In a possible implementation, the processor 1301 is specifically configured to: execute a first process of the first service over the first resource corresponding to the first resource information in the first resource sandbox; send the first request to the second node through the communication interface 1302, where the first request is used to request the second node to execute the first service over the first resource on the second node; and receive an execution result that is sent by the second node and that is of executing the first service over the first resource.

In a possible implementation, the processor 1301 is further configured to: determine that a second process of the first service needs to be executed over a second resource corresponding to second resource information in the first resource sandbox, and determine that a second process of a second service is executed over the second resource corresponding to the second resource information in the first resource sandbox; send a second request to the second node through the communication interface 1302, where the second request is used to request the second node to run the second process, and the second request includes running data of the second process; and stop running the second process.

In a possible implementation, the processor 1301 is further configured to: obtain a first instruction, where the first instruction is used to run a second process of the first service; and send a second request to the second node through the communication interface 1302 in response to the first instruction, where the second request is used to request the second node to run the second process, and the second request includes a startup parameter of the second process. In a possible implementation, the processor 1301 is further configured to synchronize resource information in the first resource sandbox to the second node through the communication interface 1302.

In a possible implementation, the first resource sandbox includes third resource information, and a resource type of a third resource corresponding to the third resource information is the same as a resource type of the first resource; and the processor 1301 is further configured to: when the first node determines that performance of the first resource is higher than performance of the third resource, generate the first resource sandbox based on the first resource information.

In a possible implementation, the first resource sandbox further includes resource information on the first node; and the processor 1301 is further configured to: when the first resource is a resource on the first node, locally access the first resource over a first process.

In a possible implementation, the resource type of the first resource is any one of the following: a system file resource, a device resource, a network resource, an inter-process communication resource, and a memory resource.

In a possible implementation, the processor 1301 is further configured to send a third request to the second node through the communication interface 1302, where the third request is used to request the second node to create a first virtual process, and the first virtual process is used by the second node to execute, based on the first virtual process, the first service over the first resource on the second node.

It should be understood that for related descriptions, refer to the descriptions in the embodiment shown in FIG. 11. Details are not described herein again.

An embodiment of this application provides a distributed resource sharing system. The system includes a first node and a second node. The second node is configured to send resource information on the second node to the first node. The first node is configured to generate a first resource sandbox based on the resource information on the second node. The first node is further configured to determine that a first service needs to be executed over a first resource corresponding to first resource information in the first resource sandbox. The first node is further configured to: when the first resource is a resource on the second node, call the second node to execute the first service over the first resource on the second node.

This application provides a computer-readable storage medium. The computer-readable storage medium stores instructions. When the instructions are run on a first node, the first node is enabled to perform the resource sharing method. For related descriptions, refer to the descriptions in the embodiment shown in FIG. 11. Details are not described herein again.

This application provides a computer program product. When the computer program product is executed by a first node, the first node is enabled to perform the resource sharing method. For related descriptions, refer to the descriptions in the embodiment shown in FIG. 11. Details are not described herein again.

The implementations of this application may be randomly combined to achieve different technical effects.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

A person of ordinary skill in the art may understand that all or some of the procedures of the methods in embodiments may be implemented by a computer program instructing relevant hardware. The program may be stored in a computer-readable storage medium. When the program is run, the procedures of the methods in embodiments may be performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A distributed resource sharing method, wherein the method comprises:
obtaining, by a first node, a first resource sandbox corresponding to a first service, wherein the first resource sandbox comprises resource information on a second node;
determining, by the first node, that the first service needs to be executed over a first resource corresponding to first resource information in the first resource sandbox; and
when the first resource is a resource on the second node, calling, by the first node, the second node to execute the first service over the first resource on the second node.

2. The method according to claim 1, wherein the determining, by the first node, that the first service needs to be executed over a first resource corresponding to first resource information in the first resource sandbox specifically comprises:
determining, by the first node, that a first process of the first service needs to be executed over the first resource corresponding to the first resource information in the first resource sandbox; and
the calling, by the first node, the second node to execute the first service over the first resource on the second node specifically comprises:
sending, by the first node, a first request to the second node, wherein the first request is used to request the second node to execute the first service over the first resource on the second node; and
receiving, by the first node, an execution result that is sent by the second node and that is of executing the first service over the first resource.

3. The method according to claim 2, wherein the method further comprises:
determining, by the first node, that a second process of the first service needs to be executed over a second resource corresponding to second resource information in the first resource sandbox;
sending, by the first node, a second request to the second node, wherein the second request is used to request the second node to run the second process, and the second request comprises running data of the second process; and
stopping, by the first node, running the second process.

4. The method according to claim 2, wherein after the determining, by the first node, that a first process of the first service needs to be executed over the first resource corresponding to the first resource information in the first resource sandbox, the method further comprises:
obtaining, by the first node, a first instruction, wherein the first instruction is used to run a second process of the first service; and
sending, by the first node, a second request to the second node in response to the first instruction, wherein the second request is used to request the second node to run the second process, and the second request comprises a startup parameter of the second process.

5. The method according to any one of claims 1 to 4, wherein before the calling, by the first node, the second node to execute the first service over the first resource on the second node, the method further comprises:
synchronizing, by the first node, resource information in the first resource sandbox to the second node.

6. The method according to any one of claims 1 to 5, wherein the first resource sandbox comprises third resource information, and a resource type of a third resource corresponding to the third resource information is the same as a resource type of the first resource; and before the obtaining, by a first node, a first resource sandbox corresponding to a first service, the method further comprises:
when the first node determines that performance of the first resource is higher than performance of the third resource, generating, by the first node, the first resource sandbox based on the first resource information.

7. The method according to claim 1, wherein the first resource sandbox further comprises resource information on the first node; and the method further comprises:
when the first resource is a resource on the first node, locally accessing, by the first node, the first resource over a first process.

8. The method according to any one of claims 1 to 7, wherein the resource type of the first resource is any one of the following: a system file resource, a device resource, a network resource, an inter-process communication resource, and a memory resource.

9. The method according to any one of claims 1 to 8, wherein before the calling, by the first node, the second node to execute the first service over the first resource on the second node, the method further comprises:
sending, by the first node, a third request to the second node, wherein the third request is used to request the second node to create a first virtual process, and the first virtual process is used by the second node to execute, based on the first virtual process, the first service over the first resource on the second node.

10. A distributed resource sharing apparatus, wherein the apparatus comprises:
a processing unit, configured to obtain a first resource sandbox corresponding to a first service, wherein the first resource sandbox comprises resource information on a second node, wherein
the processing unit is further configured to determine that the first service needs to be executed over a first resource corresponding to first resource information in the first resource sandbox; and
a communication unit, configured to: when the first resource is a resource on the second node, call the second node to execute the first service over the first resource on the second node.

11. The apparatus according to claim 10, wherein the processing unit is specifically configured to determine that a first process of the first service needs to be executed over the first resource corresponding to the first resource information in the first resource sandbox; and
the communication unit is specifically configured to:
send a first request to the second node, wherein the first request is used to request the second node to execute the first service over the first resource on the second node; and
receive an execution result that is sent by the second node and that is of executing the first service over the first resource.

12. The apparatus according to claim 11, wherein the processing unit is further configured to determine that a second process of the first service needs to be executed over a second resource corresponding to second resource information in the first resource sandbox;
the communication unit is further configured to send a second request to the second node, wherein the second request is used to request the second node to run the second process, and the second request comprises running data of the second process; and
the processing unit is further configured to stop running the second process.

13. The apparatus according to claim 11, wherein the processing unit is further configured to obtain a first instruction, wherein the first instruction is used to run a second process of the first service; and
the communication unit is further configured to send a second request to the second node in response to the first instruction, wherein the second request is used to request the second node to run the second process, and the second request comprises a startup parameter of the second process.

14. The apparatus according to any one of claims 10 to 13, wherein the communication unit is further configured to synchronize resource information in the first resource sandbox to the second node.

15. The apparatus according to any one of claims 10 to 14, wherein the first resource sandbox comprises third resource information, and a resource type of a third resource corresponding to the third resource information is the same as a resource type of the first resource; and the processing unit is further configured to: when the first node determines that performance of the first resource is higher than performance of the third resource, generate the first resource sandbox based on the first resource information.

16. The apparatus according to claim 10, wherein the first resource sandbox further comprises resource information on the first node; and the processing unit is further configured to: when the first resource is a resource on the first node, locally access the first resource over a first process.

17. The apparatus according to any one of claims 10 to 16, wherein the resource type of the first resource is any one of the following: a system file resource, a device resource, a network resource, an inter-process communication resource, and a memory resource.

18. The apparatus according to any one of claims 10 to 17, wherein the communication unit is further configured to send a third request to the second node, wherein the third request is used to request the second node to create a first virtual process, and the first virtual process is used by the second node to execute, based on the first virtual process, the first service over the first resource on the second node.

19. A distributed resource sharing system, wherein the system comprises a first node and a second node, wherein
the second node is configured to send resource information on the second node to the first node;
the first node is configured to generate a first resource sandbox based on the resource information on the second node;
the first node is further configured to determine that a first service needs to be executed over a first resource corresponding to first resource information in the first resource sandbox; and
the first node is further configured to: when the first resource is a resource on the second node, call the second node to execute the first service over the first resource on the second node.

20. An apparatus, used as a first node, wherein the first node comprises one or more processors, one or more memories, and a communication module, the communication module and the one or more memories are coupled to the one or more processors, the one or more memories are configured to store computer program code, and the computer program code comprises computer instructions; and the one or more processors call the computer instructions to enable the first node to perform the method according to any one of claims 1 to 9.

21. A computer-readable storage medium, wherein the computer-readable storage medium stores instructions;
and when the instructions are run on a first node, the first node is enabled to perform the method according to any one of claims 1 to 9.

22. A computer program product, wherein when the computer program product is executed by a first node, the first node is enabled to perform the method according to any one of claims 1 to 9.
